(19) Europäisches Patentamt / European Patent Office / Office européen des brevets

(11) **EP 3 438 693 B1**

(12) **EUROPEAN PATENT SPECIFICATION**

(45) Date of publication and mention
of the grant of the patent:
**20.12.2023   Bulletin 2023/51**

(21) Application number: **18187391.0**

(22) Date of filing: **03.08.2018**

(51) International Patent Classification (IPC):
**G01S 13/34** $^{(2006.01)}$       **H04B 1/69** $^{(2011.01)}$
**H04L 27/10** $^{(2006.01)}$       **H04L 27/12** $^{(2006.01)}$
**H04L 27/14** $^{(2006.01)}$       **G01S 13/88** $^{(2006.01)}$

(52) Cooperative Patent Classification (CPC):
**G01S 13/34; G01S 7/023; G01S 7/0233;**
**G01S 7/0234; G01S 7/288; G01S 7/2886;**
**G01S 7/354; G01S 13/26; G01S 13/345;**
**H04B 1/69; H04L 27/122;** G01S 7/358;
G01S 13/284; G01S 13/286; G01S 13/343;   (Cont.)

(54) **A METHOD OF SIGNAL DECODING AND ASSOCIATED APPARATUS**

VERFAHREN ZUR SIGNALDEKODIERUNG UND ZUGEHÖRIGE VORRICHTUNG

PROCÉDÉ DE DÉCODAGE DE SIGNAL ET DISPOSITIF ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **03.08.2017   IT 201700090111**

(43) Date of publication of application:
**06.02.2019   Bulletin 2019/06**

(73) Proprietor: **Continental Autonomous Mobility**
**Germany GmbH**
**85057 Ingolstadt (DE)**

(72) Inventor: **DONES, Enrico**
**21100 Varese (IT)**

(74) Representative: **Continental Corporation**
**c/o Continental Automotive GmbH**
**Intellectual Property**
**Nordostpark 30**
**90411 Nürnberg (DE)**

(56) References cited:
US-A- 6 064 695          US-A1- 2014 362 891
US-A1- 2016 094 270

• ROY ARIJIT ET AL: "Phase coded nonlinear chirp
modulation in multiuser communication
systems", 2017 INTERNATIONAL CONFERENCE
ON INNOVATIONS IN ELECTRONICS, SIGNAL
PROCESSING AND COMMUNICATION (IESC),
IEEE, 6 April 2017 (2017-04-06), pages 89-94,
XP033227063, DOI: 10.1109/IESPC.2017.8071871

(52) Cooperative Patent Classification (CPC): (Cont.)
G01S 13/88; G01S 13/931; G01S 15/931;
G01S 2013/9324; H04B 2001/6912; H04L 27/103;
H04L 27/14

**Description**

Field of the invention

The present invention relates to the field of signal encoding/decoding and processing and in detail refers to a method of decoding of symbols for radio or ultrasonic signals and to a radio or ultrasonic signal receiving device. The invention further comprises a signal decoding apparatus that exploits the signal decoding technique herein disclosed.

State of the art

Chirp signals are typically used for encoding and decoding data streams that simply recognize the frequency increase - also called chirp-up - and decrease - also called chirp-down - as bits "1" or "0".

Encoding data streams keeping into account the frequency increase or decrease makes it possible to use only two symbols - i.e. two different frequency variations function of time - with a coding of one bit per symbol.

Further known techniques use frequency variation function of time each one producing a variation of the slope (gradient) of the frequency versus time or a phase or frequency shift in order to obtain many symbols. Some other systems use time shifted replay of modulo cycled complex Zadoff-Chu chirps in order to make the cross-correlation with wrong shifts become zero in a matched filter. Other systems can use a combination of all the previous methods.

A special interest has a coding superimposed on a chirp transmitted by a RADAR system either based on pulse or frequency modulated continuous wave, wherein the coding is requested for discriminating the proper returning echo signal from another signal coming from a source of interference. In this case, the number of symbols are generally limited also by the tolerances on respect of the Doppler Effect distortion.

Adverse effects of the Doppler shift and rates on the echoed signal respective to the transmitted signals significantly limit the applicability of known systems to ultrasonic radars, e.g. for automotive applications wherein not only the distance but also the relative velocity between two objects should be precisely estimated.

The applicant has noticed the need of searching for a specific coding technique which allows for providing immunity to noises and relevant ratio between the autocorrelation of the received signal respective to the cross-correlation. In particular, the applicant has found the need to provide for a coding technique that, in addition to the aforementioned needs, allows the transmitted signal to be received without altering the capacity of decoding a transmitted symbol irrespective of the fact that the sampling frequency is significantly higher than the maximum instantaneous frequency of the chirp or is intermediate between the minimum and maximum frequency of the chirp.

US 6064695 describes "a spread spectrum data communication system utilizing a modulation technique referred to as differential code shift keying (DCSK)".

US 2014/0362891 describes an "apparatus for generating and encoding data onto chirp signals".

US 2016/0094270 describes "a system and a method for time synchronization on a wireless network, based on the exchange of Chirp Spread Spectrum information".

Summary of the invention

The invention relates to a method of decoding a data stream from a received signal according to claim 1. Advantageous embodiments of the method are subject to the claims 2 to 4. Furthermore, the invention relates to a signal decoding apparatus according to claim 5.

The aforementioned drawbacks are thereby solved by a method of coding of symbols for electromagnetic signals, said method comprising:

- a step of generating a plurality of symbols each comprising a sequence of one or more bits;
- a step of electronically generating a law of frequency variation of at least a first in-phase chirp signal, wherein said law of frequency variation is specific for each symbol of said plurality of symbols;
- wherein said at least a first in-phase chirp signal has a phase which is time variant in accordance to said law of frequency variation and wherein:
- said law of frequency variation comprises electronically defining for each of said symbols and inversion time wherein the phasor of the complex envelope of said at least a first in-phase signal and of a second in-quadrature signal generated or recovered in accordance to said at least a first in-phase signal changes direction of rotation or wherein an instantaneous chirping frequency of said at least a first in-phase signal, evolving between a maximum value and a minimum value or vice versa passes through a predetermined value.

In particular, according to a first aspect of the present invention, said in-quadrature signal is the in-quadrature replica of the first in-phase signal.

In another aspect, the method comprises:

- a step of electronically generating a specific law of instantaneous frequency variation in time of at least a first in-phase transmitted chirp signal, by which said frequency passes through the value zero during the sweep, in combination with a receiver stage able to recognize the inversion of rotation of the complex envelope formed by said in-phase chirp and its quadrature replica consequent to the passage of frequency to the zero value, or, alternatively, a specific law of instantaneous frequency variation in time of at least a first in-phase transmitted chirp, involving a passage through a predetermined value (or through one of a set of predetermined values, not necessarily zero), in combination with a specific receiver local sampling frequency equal to said predetermined value (or the one of the set of predetermined values), so that it is able to generate a phasor inversion of rotation in the output of the receiver quadrature demodulator in correspondence of the passage of the frequency of the incoming chirp through this predetermined value,
- wherein said law of frequency variation, and said sampling frequency, are, in combination, specific for each symbol of said plurality of symbols.

In another aspect, a method of coding a data stream for transmission as a signal (which may be an electromagnetic signal or an ultrasonic signal, for example) is provided, the method comprises:

- defining a plurality of symbols, wherein each symbol represents a respective sequence of one or more bits;
- for each symbol of the plurality of symbols, defining a corresponding chirp signal, wherein the chirp signal has a profile of instantaneous frequency variation over time;
- coding the data stream for transmission as a signal comprising a sequence of one or more chirps by determining a sequence of one or more symbols that encode the data stream and determining the sequence of one or more chirps that corresponds to the sequence of one or more symbols;
- wherein the profile of instantaneous frequency variation of each chirp signal comprises an inversion time (which may be measured from the start of the chirp signal or from an inversion time of a previous chirp signal), wherein the instantaneous frequency of the signal is zero at the inversion time, and wherein the data stream is represented by the inversion times of the chirp signals.

Preferably the instantaneous frequency passes through zero at the inversion time when the instantaneous frequency changes from positive to negative or vice versa. The inversion time is preferably unique for each chirp signal (and univocally defines the respective symbol).

The chirp signal has a phase that varies over time at a rate determined by the profile of instantaneous frequency variation. In other words, the chirp signal can be described by a phasor that rotates over time at a rate determined by the profile of instantaneous frequency variation. At the inversion time, the rotating phasor describing the chirp signal changes direction.

The chirp signal may be represented by an in-phase component of the signal and an in-quadrature (or quadrature-phase) component of the signal. These signals together may be referred to as the "complex envelope" of the signal. A complex "phasor" of the signal is defined as having a real component corresponding to the in-phase signal and an imaginary component corresponding to the in-quadrature signal. At any given instant during the chirp, the phase of the chirp signal may be determined from the complex envelope by determining the angle between the phasor of the signal and the real axis.

For example, if the in-phase signal is expressed as sin(phase), the in-quadrature part is simply sin(phase - 90°), so, in the first way, and depending on the embodiment, the in-quadrature part can be built from the in-phase signal by hardware circuit or software algorithm. Alternatively, the in-quadrature part can be transmitted together with the in-phase part as a baseband of a quadrature modulation of a high frequency carrier wave and de-modulated in the receiver by a quadrature demodulator, retrieving both the in-phase and in-quadrature parts. The method may further comprise determining an in-phase component of the chirp signal and an in-quadrature component of the chirp signal, which together define a complex envelope, wherein a phasor of the complex envelope changes direction of rotation at the inversion time.

In a "second way", the transmitted signal may be a chirp which does not have an inversion time during the interval of application (because the zero instantaneous frequency is never crossed) but it is prepared to have inversion-time in the receiver that has a quadrature demodulator with a local mixer frequency intermediate between the starting and the stopping frequencies of the transmitted signal, so producing the in-phase and in-quadrature part of a new signal (slower than the transmitted one) which have an inversion-time: this is due to the fact that, mathematically, the demodulation acts as if the instantaneous frequency curve of the chirp was translated to cross the axis of zero instantaneous frequency exactly in the instant in which it has the frequency equal to that of the local oscillator (this frequency is the said predetermined value).

As an alternative to the method described above, a method encompassing the "second way" is provided. In the second way, the transmitted chirp may not comprise a true inversion time at which the instantaneous frequency is zero (or if there is an inversion time, this is not the one that the transducer demodulator delivers). The profile of instantaneous frequency variation of each chirp signal is does not necessarily COMPRISE and inversion time but rather IS PREDISPOSED TO PRODUCE an inversion time.

In the second way, the in-phase and in-quadrature signals in the receiver may not be the same as the in-phase and in-quadrature part of the transmitted chirp. In the second way, the in-quadrature component may be generated by the receiver and may have a lower frequency than the chirp signal (as said above, the profile of frequency variation may be translated into a slower frequency range by the receiver.

For the purposes of the present invention, as per "instantaneous chirping frequency" or "instantaneous frequency" $f_i(t)$ will be meant the derivative of the cumulated angle of the phasor over the time divided by $2\pi$.

In particular, said electromagnetic signal is preferably but in a non-limiting extent a radio or ultrasonic signal. As per ultrasonic signal, shall be intended a signal whose frequency is higher than 20kHz.

According to a further non-limiting aspect, in the method according to the present invention said predetermined, value is zero when the said instantaneous frequency is calculated according to the aforementioned definition of "instantaneous frequency".

According to a further non limiting aspect, otherwise, said law of frequency variation comprises electronically defining for each of said symbols and inversion time and a correspondent receiver sampling frequency wherein the phasor of the complex envelope of the received sampled version of said at least a first in-phase signal changes direction of rotation or wherein an instantaneous chirping frequency of said sampled version of at least a first in-phase signal, evolving between a maximum value and a minimum value or vice versa passes through a predetermined value.

According to a non-limiting aspect, the method according to the present invention further comprises a step of electronically generating a plurality of at least first in-phase chirp signals wherein each chirp signal of said plurality of chirp signals is built by circularly time-shifting a generator chirp signal generating a specific phasor inversion time.

According to a first aspect of the present invention, in said generation of said specific phasor inversion time a first way (from here on, named "first way") to generate said inversion time is when the phasor is intended to be the complex function rotating at the chirp frequencies, and the phasor is directly built from the in-phase chirp signal as the real part of said complex function and its reconstructed in-quadrature chirp signal as the imaginary part of said complex function. In this first way, the chirps shall be processed digitally with a sampling rate much higher than the chirp frequencies to produce faithful digital copies of the chirps.

According to a further aspect of the present invention, in said generation of said specific phasor inversion time, the second way (from here on, named "second way") to generate said inversion time is when the phasor is intended to be the complex envelope resulting from a process of down-conversion with a mixer which produces a rotating phasor at a beating low frequency, generated by making the chirp signal beat in a quadrature mixer with a predetermined frequency near the middle frequency of the chirp signal itself, then filtering the high frequencies so obtaining real part and imaginary part of the phasor.

Either in the first way or in the second way, it is possible to extend the concept, in a further development, by considering at the same time a couple of different chirps able to codify different symbols, in the first way or in the second way, then making them feed an in-quadrature modulator modulating a carrier wave; said further development, from here on mentioned as "extension") can be considered a parallel double coding of symbols by means of said chirp signal. Correspondingly, the receiver shall carry out a down-conversion with a coherent quadrature demodulator to extract the two different chirps in baseband that, thanks to their orthogonality in modulation, are independent one another; each of the two chirp signals will be processed as above mentioned (in the first or in the second way). This extension permits to split in parallel the stream of symbols and doubling the coding.

Advantageously, the circular time shifting allows to keep almost constant the bandwidth of each of the chirps, without for this affecting the difference in levels of autocorrelation and cross-correlation among them.

According to a non-limiting aspect, in the method according to the present invention said law of frequency variation provides for defining bandwidth of frequency variation having a maximum and minimum value for the instantaneous frequency of said at least one in-phase chirp signal, said method further comprising a step of providing a frequency jump in said instantaneous frequency of said at least one in-phase chirp signal.

According to a non-limiting aspect, in the method according to the present invention further comprises said frequency jump has an amplitude equivalent to the bandwidth of said frequency variation.

According to a non-limiting aspect, in the method according to the present invention, said frequency jump introduces a jump of phase in said at least a first in-phase chirp signal occurring at a time that differs from the inversion time by the half the symbol time.

Advantageously, said frequency jump helps the phase aforementioned circular time shifting to maintain the same frequency bandwidth and occupation for each chirp.

The frequency jump, as it acts abruptly across the intermediate mixer frequency, may involve an abrupt inversion of phasor rotation. However, this is different from the smooth inversion that occurs when the instantaneous frequency crosses with a finite gradient the mixer frequency. The two rotations can be distinguished by discarding the abrupt inversion at the stage of analysis of phasor rotation.

Using a correlator (matched filter), the peak of correlation due to the frequency jump is avoided in the application involving a transducer device with a frequency response bandwidth narrower than the excursion of frequency in the jump. According to a further non-limiting aspect, the method further comprises appending a Doppler shift estimation compensation preamble to said at least one in-phase chirp signal. According to a further non-limiting aspect, the method further comprises appending a Doppler shift estimation compensation preamble to said at least one in-phase chirp signal.

Preferably, but in a non-limiting extent, said Doppler shift estimation compensation preamble is a fixed frequency burst signal transmitted before the starting of said at least an in-phase chirp signal.

When the chirps according to the aforementioned method are transmitted towards a moving target or object, appending such a burst allows for permitting the receiver compensate the frequency shift that the echoed signal returning to the receiver has due to Doppler shift. The Applicant further points out that the burst can be repeatedly transmitted before the starting of further at least in-phase chirp signals so as to advantageously mitigate the effect of frequency shift the echoed signal can have in case of variation of reciprocal speed between the target has respective to the receiver and/or transmitter.

According to a non-limiting aspect, the method according to the present invention further comprises a further step of generating at least one second chirp signal feeding a modulator in quadrature respective to said at least a first in phase chirp signal, said at least one second in quadrature chirp signal has an own law of frequency variation different from said at least one first in-phase chirp signal.

According to a non-limiting aspect, in the method according to the present invention said at least one second in quadrature chirp signal respective to said at least one first in-phase chirp signal are produced as baseband signals modulating a carrier wave with higher frequency.

Advantageously this solution allow to create and manage the in-phase and in-quadrature signals with more freedom, since they can convey two independent symbols in the same time, increasing the throughput rate.

According to a non-limiting aspect of the present invention, said law of frequency variation versus time follows a linear law, wherein said linear law is proportional to a constant real value multiplied by the time.

According to a further non-limiting aspect of the present invention, in alternative said law of frequency variation versus time follows a polynomial law.

According to a further non-limiting aspect of the present invention, in alternative law of frequency variation versus time follows an exponential law. More in detail, said exponential law assumes the form $f_i(t) \propto f_0 e^{\frac{-t}{\tau}}\left(1 - \frac{t}{\tau}\right)$

The Applicant has advantageously considered the using an exponential law for the frequency variation allows for loosening the constraint about the inversion times.

The present invention provides a method of decoding a data stream from a received signal (which may be an electromagnetic signal or an ultrasonic signal, for example), the method comprises:

- determining that the received signal comprises a sequence of one or more chirp signals and, for each chirp signal:

  ○ determining an inversion time of the chirp signal (which may be measured from the start of the chirp signal or from an inversion time of a previous chirp signal), wherein an instantaneous frequency of the chirp signal is zero at the inversion time, preferably the instantaneous frequency passes through zero at the inversion time when the instantaneous frequency changes from positive to negative or vice versa, and
  ○ determining that the inversion time corresponds to a respective symbol, which represents a sequence of one or more bits; and

- decoding the received signal by reconstructing the data stream from the sequence of one or more bits corresponding to the respective symbol corresponding to each chirp signal, and wherein the inversion times of the chirp signals represent the data stream.

In a first embodiment, determining an inversion time of the chirp signal may comprise:

determining an in-phase component of the chirp signal and an in-quadrature component of the chirp signal, which together define a complex envelope, wherein
a phasor of the complex envelope changes direction of rotation at the inversion time.

Determining an inversion time of the chirp signal may further comprise:

- determining how the phasor of the complex envelope of the signal varies over time;
- calculating how a rate of rotation of the phasor of the chirp signal varies over time to determine how the instantaneous frequency varies over time; and
- determining that the inversion time is the time at which the instantaneous frequency of the chirp signal is zero.

Determining an in-phase component of the chirp signal and an in-quadrature component of the chirp signal may comprise:

- retrieving an in-phase component of the chirp signal from the received signal; and
- reconstructing an in-quadrature component of the signal.

The phasor may be directly built from the in-phase chirp signal as the real part of the complex envelope and the reconstructed in-quadrature chirp signal as the imaginary part of said complex envelope. The chirp signals may be processed digitally with a sampling rate higher than a maximum frequency of the chirp signals. Advantageously, this allows the faithful reproduction of digital copies of the chirps. More preferably, the sampling rate may be at least double the maximum frequency of the chirp signals.

In a second embodiment, the method may further comprise:
mixing the received signal (or each chirp signal) in a quadrature mixer with an oscillating frequency at a predetermined frequency. The predetermined frequency may be higher than a minimum frequency of the chirp signals and lower then a maximum frequency of the chirp signals. More preferably, the predetermined frequency may be halfway between the minimum frequency of the chirp signals and the maximum frequency of the chirp signals.

In the second embodiment, mixing the received signal with an oscillating frequency may produce a complex envelope with a rotating phasor. Determining an inversion time of the chirp signal may comprise determining a time at which the phasor of the complex envelope changes direction of rotation.

The method may further comprise filtering the complex envelope with a low-pass filter to obtain the in-phase component and in-quadrature component of the signal.

It is further realized an electronic signal receiving device, comprising:

- at least one receiver stage having an input suitable to be connected with an antenna for receiving signals and at least a first and second exit fed with a first in-phase signal, and a second in-quadrature signal electronically retrieved from said signals, at least one phasor rotation or its related instantaneous frequency analysis stage connected downstream of said receiver stage and having at least a first and second input respectively fed with said first in-phase signal and said second in-quadrature signal;
- wherein said phasor rotation or its related instantaneous frequency analysis stage is configured for electronically setting a first instant of time in correspondence of the beginning of said first in-phase signal and second in-quadrature signal, and for extracting a phasor of the complex envelope of said first in-phase signal and of said second in-quadrature signal and for positioning a second instant of time in correspondence of the time wherein said phasor changes the direction of rotation, or for extracting an instantaneous chirping frequency for said first in-phase signal and said second in-quadrature signal and for positioning a second instant of time in correspondence of the instant of time wherein said chirping frequency is at a predetermined value, said second instant of time being a retrieved inversion time;
- symbol generating means, electronically comparing said retrieved inversion time with a predefined set of inversion times $\tau_i, i \in (1, ...,N)$ being biunivocally correlated with a preset set of symbols, and transmitting on an output thereof a recovered data stream comprising a plurality of symbols in sequence.

In another aspect, an electronic signal receiving device (100), comprises:

- at least one receiver stage (101) having an input suitable to be connected with an antenna for receiving signals (X(t)) and at least a first and second exit fed with a first in-phase signal (I(t)), and a second in-quadrature signal (Q(t)) electronically retrieved from said signals (X(t)), at least one phasor rotation or its related instantaneous frequency analysis stage (104), connected downstream of said receiver stage (101) and having at least a first and second input respectively fed with said first in-phase signal (I(t)) and said second in-quadrature signal (Q(t));
- wherein said phasor rotation or its related instantaneous frequency analysis stage (104) is configured for electronically setting a first instant of time in correspondence of the beginning of said first in-phase signal (I(t)) and second in-quadrature signal (Q(t)), and for extracting a phasor of the complex envelope of said first in-phase signal and of said second in-quadrature signal and for positioning a second instant of time in correspondence of the time wherein said phasor changes the direction of rotation, or for extracting an instantaneous chirping frequency for said first in-phase signal (I(t)) and said second in-quadrature signal (Q(t)) and for positioning a second instant of time in correspondence of the instant of time wherein said chirping frequency is at a predetermined value equal to the local oscillator receiver frequency (or sampler frequency), said second instant of time being a retrieved inversion time ($\tau$);

- symbol generating means, electronically comparing said retrieved inversion time with a predefined set of inversion times ($\tau_i$, i ∈ (1, ..., N )) being biunivocally correlated with a preset set of symbols, and transmitting on an output thereof a recovered data stream comprising a plurality of symbols in sequence.

In another aspect, a signal decoding apparatus for decoding a data stream from a received signal (which may be an electromagnetic signal or an ultrasonic signal, for example) is provided, the apparatus comprises:

- a receiver stage (101) having an input suitable for receiving signals (for example from an antenna);
- a signal analysis stage (for analyzing phasor rotation or related instantaneous frequency) configured to:

    ○ determine that the received signal comprises a sequence of one or more chirp signals and, for each chirp signal:

       ▪ determine an inversion time of the chirp signal (which may be measured from the start of the chirp signal or from an inversion time of a previous chirp signal), wherein an instantaneous frequency of the chirp signal is zero at the inversion time, preferably the instantaneous frequency passes through zero at the inversion time when the instantaneous frequency changes from positive to negative or vice versa, and

       ▪ determine that the inversion time corresponds to a respective symbol, which represents a sequence of one or more bits; and
    ○ a data stream generating means (or symbol generating means) configured to reconstruct the data stream from the sequence of one or more bits corresponding to the respective symbol corresponding to each chirp signal.

According to a non-limiting aspect, said receiving device has a receiver stage having an input suitable to be connected with an antenna for receiving signals and at least a first and second exit fed with a first in-phase signal, and a second in-quadrature signal electronically retrieved from said signals. Advantageously this solution applies to the case of parallel double coding.

According to an aspect, said symbol generating means comprise means accessing to a memory wherein said biunivocal correlation between a preset set of symbols and said inversion times is stored, and comprise means transmitting on said output the symbol whose inversion time correspond to the retrieved inversion time.

Alternatively, said symbol generating means comprise means accessing to a memory wherein said bi-univocal correlation (relation) between a preset set of symbols associated to each preselected receiver's down-sampling frequency of a preset set of frequencies and said inversion times ($\tau i$ , i ∈ (1, ..., N )) is stored, and comprise means transmitting on said output the symbol.

Advantageously said biunivocal relation allows for preventing misinterpretation of symbols between the received and transmitted side of the device.

According to a further aspect - corresponding to the aforementioned first way - said receiver stage performs a sampling of at least part of said received signal with a frequency significantly higher than the maximum frequency of said received signal.

According to a further aspect - corresponding to the aforementioned extension - said receiver stage performs a coherent demodulation and comprises a primary mixer stage fed on its inputs with said received signal and comprising sampling means performing a sampling of at least part of said received signal with a frequency significantly higher than the maximum frequency of said received signal.

According to a further aspect corresponding to the aforementioned second way, said receiver stage performs a non-coherent demodulation and comprises a primary mixer stage fed on its inputs with said received signal and comprising sampling means performing a sampling of at least part of said received signal with a frequency which is intermediate between the maximum and minimum frequency of said first in-phase signal. Equivalently, the down-sampling should be carried out by using an integer multiple of the said intermediate frequency for the local oscillator of the mixer, followed by a low-pass filter to remove the high frequency repeated spectrum copies.

Although downsampled, the low frequency complex envelope extracted by mixing the received signals possesses an inversion time as it is shown in Table 2, during the time interval of transmission (this last corresponding to the symbol time), even if the high frequency transmitted chirp in-phase part and its quadrature replica could not produce any inversion time or could produce an inversion time only after the time interval of transmission.

Thereby, the biunivocal association between symbols and inversion times can be stored in memories suitable to be adapted either to coherent or incoherent receivers without any adaptation.

According to a further non-limiting aspect, said receiver device further comprises at least one discriminator stage.

In particular, according to a further non-limiting aspect, said receiver device comprises a plurality of discriminator stages in a number equal to the number of inversion times of the set of chirp signals, in particular by using in parallel a set of correlators each of one compares by-the-fly the incoming received symbol with each one of the symbols of the said set of symbol.

According to the claimed invention, said device comprises a synchronized single discriminator stage comparing by-the-fly each received symbol in a single correlator with a unique fixed pattern symbol, detecting a correlation peak position, that is univocally related to the time-shift and to the inversion time.

In particular, said synchronized single discriminator stage discriminates the specific received symbol among the said set of symbols in a second stage by comparing the said peak position with a set of numbers univocally related to the said set of symbols. According to a further aspect, said fixed pattern symbol is pre-chosen among the symbol in the said set of symbols.

Said solution advantageously allows for discriminating in real time the right received symbol, i.e. the right inversion time, without involving a burden in designing a complex multi-stage of parallel correlators.

A radar receiver is further disclosed. Said radar disclosed is configured for receiving at least a chirp signal with a predefined frequency variation law whose inversion time, present directly in the law (first way) or generable at the receiver (second way), is representative of a predefined symbol biunivocally associated thereto, said radar receiver comprising a cross correlator comparing a signal-processed version of said chirp signal with a signal-processed version of one pre-chosen chirp signal of a set of chirp signals.

According to a first aspect, further comprising a sample clock initialized by detection of reception of said chirp signal, preferably at a defined phase value, that could be at the first zero amplitude instant, in order to fix a defined initial phase of local oscillator of the mixer; said cross correlator is controlled by a triggering signal produced by said sample clock.

According to a further aspect, said radar receiver comprises a shift register matrix comprising an output feeding a first input of said cross correlator, said shift register matrix being fed by a processed version of said chirp signal, said processed version being sampled by an analog-to-digital converter sampling at a reference sampling frequency multiplied by a first integer value.

According to a further aspect, said receiver comprises a decimation stage arranged in series after said analog-to-digital converter, said decimation stage decimating said processed version of said chirp signal by said first integer value.

According to a further non-limiting aspect, said receiver comprises a synchronized single discriminator stage comparing by-the-fly each received symbol in a single correlator with a unique fixed pattern symbol, detecting a correlation peak position, that is univocally related to the time-shift and to the inversion time.

According to a further non-limiting aspect, depending on the previous aspect, said synchronized single discriminator stage discriminates the specific received symbol among the said set of symbols in a second stage by comparing the said peak position with a set of numbers univocally related to the said set of symbols. According to a further aspect, said cross correlator is triggered by a sampling reference signal which has said sampling frequency multiplied by a first integer value and divided by a second integer value corresponding to the number N of samples per symbol.

A further object of the present invention concerns a transmission system, comprising means generating or receiving a plurality of symbols from a stream of bits, storage means storing a plurality of biunivocal associations between each symbol of said plurality of symbols and an inversion time for a chirped signal with frequency variable according to a predetermined frequency variation law $f_i(t)$, and signal generation means generating a temporal sequence of said at least one chirped signal in a form of an at least one in-phase electromagnetic signal based on said symbols, wherein said inversion time is the time wherein the phasor of the complex envelope of said at least a first in-phase signal and of a second in-quadrature signal generated or recovered in accordance to said at least a first in-phase signal changes direction of rotation or, alternatively, wherein said inversion time is the time wherein the phasor of the complex envelope of the quadrature downsampled version of said at least a first in-phase signal changes direction of rotation, or wherein an instantaneous chirping frequency of said at least a first in-phase signal, or alternatively, an instantaneous frequency of a downsampled version of said at least a first in-phase signal, evolving between a maximum value and a minimum value passes through a predetermined value.

In another aspect, the present invention provides a signal generation apparatus for coding a data stream for transmission as a signal (which may be an electromagnetic signal or an ultrasonic signal, for example), the system comprises:

- storage means storing:

  ○ definitions of a plurality of symbols, wherein each symbol represents a respective sequence of one or more bits, and
  ○ for each symbol of the plurality of symbols a definition of a corresponding chirp signal, the definition comprising a profile of instantaneous frequency variation over time, wherein a chirp signal generated according to the definition has a phase that varies over time at a rate determined by the profile of instantaneous frequency variation; and signal generation means configured to:

- determine a sequence of one or more symbols that encode the data stream,
- determining the sequence of one or more chirps that corresponds to the sequence of one or more symbols, and
- generate a temporal sequence of one or more chirp signals,

- wherein the law of frequency variation of each chirp signal comprises an inversion time (which may be measured from the start of the chirp signal or from an inversion time of a previous chirp signal), wherein the instantaneous frequency of the signal is zero at the inversion time, preferably the instantaneous frequency passes through zero at the inversion time when the instantaneous frequency changes from positive to negative or vice versa, wherein the inversion time is preferably unique for each chirp signal and univocally defines the respective symbol.

According to an aspect of the present invention, in said system, said signal generation means, in a non-limiting embodiment, comprise a multiplexer provided with a plurality of inputs each fed with a reference chirped signal of said chirped signal, and a control input selecting at least one of said reference chirped signals according to said plurality of symbols.

Advantageously this allows for having yet stored in the memory of the transmitter a copy of each of the chirped signals which are requested for transmitting the message.

According to a further aspect of the present invention, said reference chirped signal is a numeric type signal, and said transmission system comprises a digital-to-analog converter, part of said signal generation means, converting the numeric output of said multiplexer from the numeric to the analog domain. Advantageously, using a numeric reference samples of chirped signals and constructing the sequence of chirped signals in numeric domain helps in flexibly design the transmitter that can be at least partially software-defined.

According to a further aspect of the present invention, said transmitter comprises a parallelizer having an input configured for receiving said streams of bits and subdividing said stream of bits in a plurality of concatenated sub-streams each having a number of bits depending upon the total number of reference chirped signals.

In particular, the length of each concatenated sub-streams, in bits, respect the law for which 2 to the power of said length is less or equal to the total number of reference chirped signals.

According to a further aspect of the present invention, said transmission system further comprises a sampling reference clock generating a reference frequency and division means for timing the input of said sub-streams to said control input of said multiplexer, said division means dividing said reference frequency for an integer corresponding to the total number of samples of each one of the samples per symbol.

Aspects of the present invention may be combined and features from specific aspects may be used in aspects described elsewhere.

For the sake of clarity, in the subsequent part of the description specific terms will be used.

For the purposes of the present invention, as "chirped signals" or "chirp" shall be intended a signal whose frequency variates over time according to a predetermined law. Each chirp signal possesses an own standard frequency that can be "chirped" upwards or downwards, also named starting frequency.

The signals according to the invention are electromagnetic (ultrasonic) signals suitable to be or either transmitted via a wired (conveyed) or a wireless (notconveyed) transmission channel.

For the purposes of the present invention, as per "inversion time", will be meant the time interval between the start instant of the signal occurrence and the moment wherein the slope of the phasor phase generated by the in-phase signal and the quadrature replica signal of an oversampled chirp or, alternatively, generated by the in-phase and in-quadrature parts of a downsampled chirp, changes sign. Furthermore, the "inversion time" will be the time interval between the start instant of the signal occurrence and the moment wherein the instantaneous frequency of the said phasor, considered to be proportional to the derivative of phase, crosses the zero. A constant bias to the instantaneous frequency can be added or anyway be present: in this case, the "inversion time" shall be considered the moment wherein the instantaneous chirping frequency plus the bias frequency crosses the zero.

For the purposes of the present invention, as per "data stream" shall be intended any juxtaposition or sequence or bits or symbols, each representing a sequence of a predetermined number of binary bits. The data stream can be either to be transmitted, i.e. fed on the input of a transmitter stage, or a data stream received at the receiver side of the transmission chain. As well the data stream can also be "enclosed" or carried by a carrier signal, whose data stream acts as agent of modulation.

Advantageously, the phasor's inversion-time can be controlled for coding/modulation, in a similar way as for the amplitude, phase and frequency of a signal. This technique gives a new contribution to communication technology by providing a new way of observing the behavior of signals. Instead of only analysing the instantaneous frequency of the signal, the present invention analyses the rotation of the complex envelope phasor. The inversion time of the signal provides a new signal property to be manipulated at the transmitter and measured at the receiver. By properly defining a symbol scheme, this property can therefore be used to encode data as a signal and decode it at the receiver.

In some aspects, the signal received by the receiver is not fully defined. This is because only one component of the transmitter signal is detected (the in-phase component). In this case, the in-quadrature component may be reconstructed locally to complete the demodulation (e.g., in the "first way" described before). In another case, the in-phase and in-quadrature parts are consequence of a demodulation process (e.g. in the "second way" described in this application). In the second way the receiver may not extract the in-quadrature replica of the incoming chirp. In the second way new in-phase and in-quadrature signals are generated at the receiver, dependent on the received signal and on the local oscillator frequency.

No previous techniques mention explicitly the inversion of rotation of the complex envelope phasor neither as a phenomenon nor as the quantity to be controlled in coding. The production of an inversion of phasor is not implicit in a chirp signal: it requires a specific dimensioning of the interval of application, the starting frequency, the bandwidth, the gradient of change in frequency, and, in the case of use of a receiver mixer, also a specific dimensioning of the frequency of the receiver sampler. Otherwise, the inversion cannot exist even if the other chirp parameters (phase, frequency, gradient, time-shift) exist and are able to be exploited for some else current decoding technique.

In particular, time-shift and inversion-time in a family of chirps built by circular time-shift are not always equivalent. Shift in inversion time is only the same as time shift in the chirp in specific circumstances (e.g. there must be a passage through the zero instantaneous frequency) and only for the transmitted chirp, not necessarily for the received chirp. Indeed, the controlled inversion of phasor rotation can be produced in the receiver down-sampler when the sampler (or the local oscillator of the mixer) is specifically predisposed to do it, even if the transmitted signal has another proper inversion time or, even, it has not any inversion time during the application time.

In this case, the fundamental constraint is to use a mixer down-sampling frequency intermediate between the starting and stopping frequency of the transmitted chirp (said pre-determined value) so that, when the frequency of the received chirp passes through it, an inversion of phasor rotation is produced in the quadrature demodulator.

So, even if the transmitter uses the well-known method of circular time-shift, the receiver uses, a new technique of implementing a predefined transmitted chirp (which can have a proper inversion time or not), in combination with a specific down-sampling frequency (and possibly one sampling frequency among a family of frequencies, whose choice is associated to a coding), plus the means for the detection of the change of direction of rotation. Note that, in this embodiment, the inversion time does not necessarily coincide with the time-shift, and it is dependent on the frequency of the down-sampler. This is described in more detail below.

For example, in the case of time\frequency shift of the ultrasonic radar shown in this patent as the last example of embodiment, the equivalence of time-shift and inversion time is real but it is to be intended in a differential way, i.e., whatever is the frequency of the receiver mixer, the difference of the values of the inversion-times of two shifted chirps is equal to the time-shift between the two chirps, but the absolute values of the two chirps are shifted by an amount dependent strictly to the choice of the receiver mixer frequency.

Description of figures

Further aspects of preferred and non-limiting embodiments of the present invention will be described more in detail in the following part of the description with reference to the annexed figures wherein:

- Figure 1 shows a block scheme of a first embodiment, suited for the said first way, of an electromagnetic (or ultrasonic) signal receiver;
- Figure 2 shows a block scheme of a second embodiment, suited for said first way, of an electromagnetic (or ultrasonic) signal receiver;
- Figure 3 shows a block scheme of a third embodiment, suited for said second way, of an electromagnetic (or ultrasonic) signal receiver;
- Figure 4 shows a block scheme of a fourth embodiment, suited for said extension applied to said second way, of an electromagnetic (or ultrasonic) signal receiver;
- Figure 5 shows an amplitude vs. time diagram of a first couple of in-phase and its in-quadrature replica chirp signals;
- Figure 6 shows a cumulated angle of phasor for the in-phase and in-quadrature signal of figure 5;
- Figure 7 shows the instantaneous frequency for the in-phase and in-quadrature signal of figure 5;
- Figure 8 shows a phasor trajectory for the in-phase and in-quadrature chirp signals of figure 5;
- Figure 9 shows a Fourier transform diagram for the in-phase and in-quadrature chirp signals of figure 5;
- Figure 10 shows an amplitude vs. time diagram of a second couple of an in-phase and its in-quadrature replica chirp signals;
- Figure 11 shows a cumulated angle of phasor for the in-phase and in-quadrature signal of figure 10;
- Figure 12 shows the instantaneous frequency of the in-phase and in-quadrature signal of figure 10;
- Figure 13 shows a phasor trajectory for the in-phase and in-quadrature chirp signals of figure 10;
- Figure 14 shows a Fourier transform diagram for the in-phase and in-quadrature chirp signals of figure 10;

- Figure 15 shows an instantaneous frequency vs. time diagram of a set of 8 signals (1 sample = 1 us);
- Figure 16 shows a set of amplitude vs. time diagrams of each of said 8 signals of figure 14;
- Figure 17 shows a Fourier transform diagram for each of said 8 signals of figure 14;
- Figure 18 shows a set of diagrams of cross-correlation for each combination of said 8 signals of figure 14;
- Figure 19 shows a block scheme of a quadrature mixer detector plus the analytical calculation of the phasor's phase and instantaneous frequency;
- Figure 20 shows a frequency vs. time diagram of the instantaneous frequency before ($\hat{f}_{ist}$) and after ($f_{ist}$) the down-sampling (or down-converting) as in the said second way;
- Figure 21 shows a time diagram of in-phase, its in-quadrature replica of a signal and respective decimated parts (down-sampling) as in the said second way ;
- Figure 22 shows a three-dimensional diagram of the phasor trajectory for the complex envelope of the signals of figure 21;
- Figure 23 shows a time diagram of in-phase, in-quadrature components of a signal, before and after a low-pass filter, and respective decimated parts after a low pass filter, after being processed by a quadrature mixer detector according to figure 19;
- Figure 24 shows a three-dimensional diagram of the phasor trajectory for the complex envelope of the signals of figure 23;
- Figure 25 shows a group of 8 time\frequency circularly shifted symbol configurations having different inversion times;
- Figure 26 shows a specific and non-limiting case wherein it appears a specific adherence of a n-th chirp signal upon the time shifted version of a first chirp;
- Figure 27 shows an instantaneous frequency vs. time diagram for the set of 8 chirp signals as in figure 25;
- Figure 28 shows a Fourier transform diagram for the set of 8 chirp signals according to figure 27;
- Figure 29 shows an angle vs. time graph for the complex envelope of the set of 8 chirp signals of figure 25;
- Figure 30 shows a set of cross-correlation diagrams between each chirp of the set of 8 chirp signals of figure 25 with a reference pattern chirp, chosen to be the chirp n. 1 of the said set of 8 chirps;
- Figure 31 show a block scheme of principle of a receiver provided with a cross-correlator stage;
- Figure 32 shows correlation diagrams for a set of 5 signals as for figure 25 when correlated to the pattern;
- Figure 33 shows a block scheme of a transmitter configured for transmitting a set of 8 chirps each one provided with an own respective inversion time (for said first way) or with an own predisposition to produce a univocal inversion time in a down-sampler or down-converter (for said second way);
- Figure 34 shows the corresponding receiver (for said first way);
- Figure 35 shows a non-limiting example of a block scheme of principle for generating a pre-determined correlation pattern (chosen to be obtained from the chirp 1 of the set of chirps) to be used as the receiver correlator pattern input in the case of application of said second way;
- Figure 36 shows an instantaneous frequency vs. time of a set of chirps in a non-limiting simulation environment for a RADAR application;
- Figure 37 shows an instantaneous frequency vs. time of the set of chirps as in figure 36 at an output of a mixer and low pass filter (after down-converting), named as "beat instantaneous frequency";
- Figure 38 and figure 39 show the simulated chirps at the output of a receiving transducer and, overlapped, the signal in-phase at the output of the receiver down-converter named as "baseband output", featuring the inversion time as for the said second way, in accordance with figures 36, 37;
- Figure 40 shows a block scheme of a receiver for the said application as in figures 36, 37, 38, 39, wherein the block 410 was interposed in the receiving chain in order to simulate the receiving transducer frequency selective behavior;
- Figure 41 shows the results of the correlator of figure 40 for each chirp when the pattern is chosen to be recovered by the first chirp by using the non-limiting scheme of figure 35.

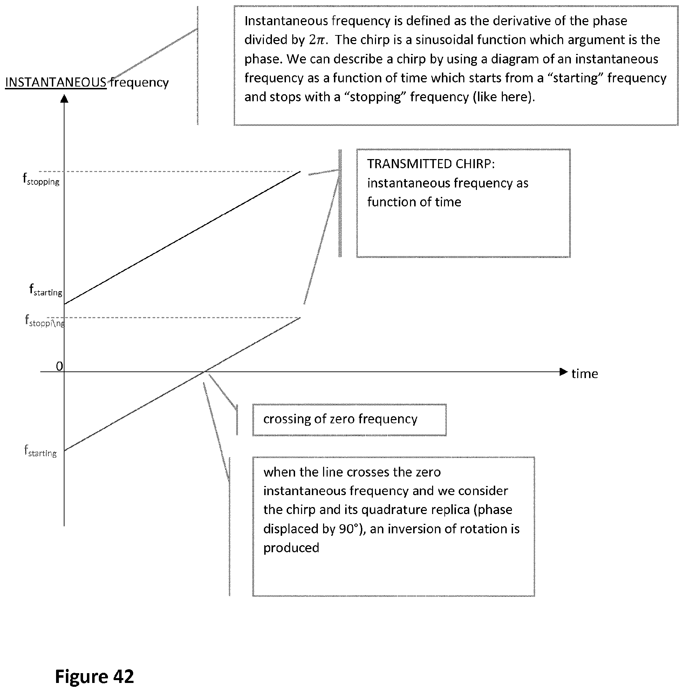

- Figure 42 shows an explanation of the operation of some prior art systems;

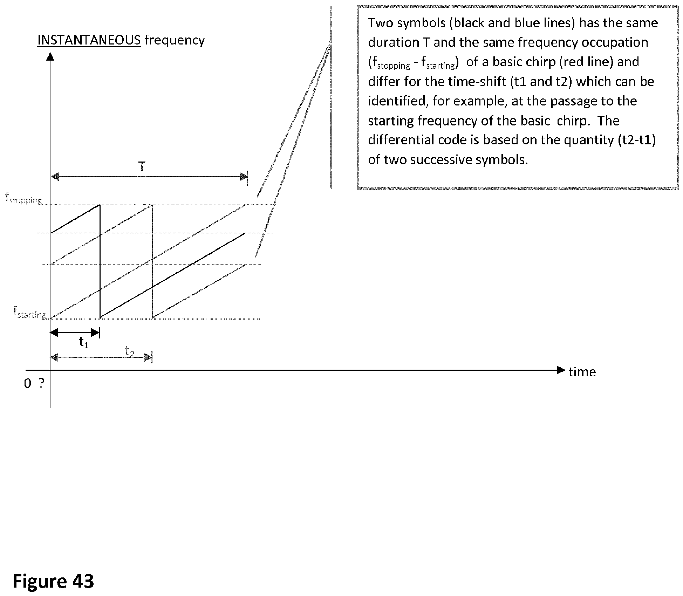

- Figure 43 shows how inversion-time is different to time-shift;

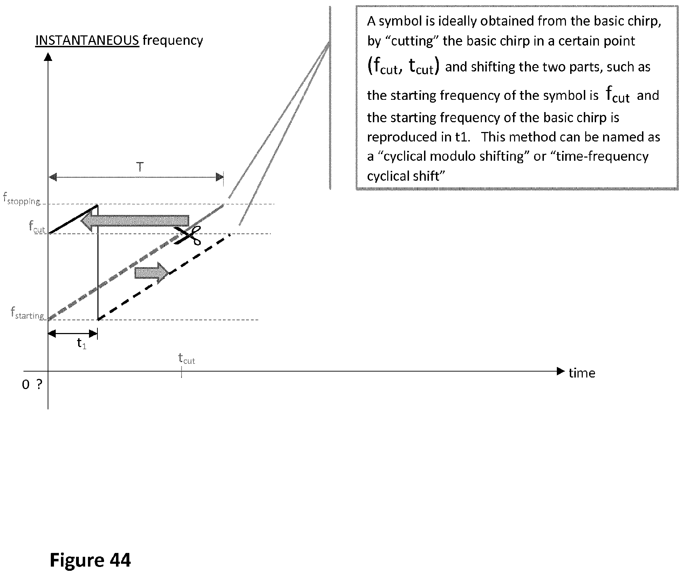

- Figure 44 shows the process of cutting a chirp;

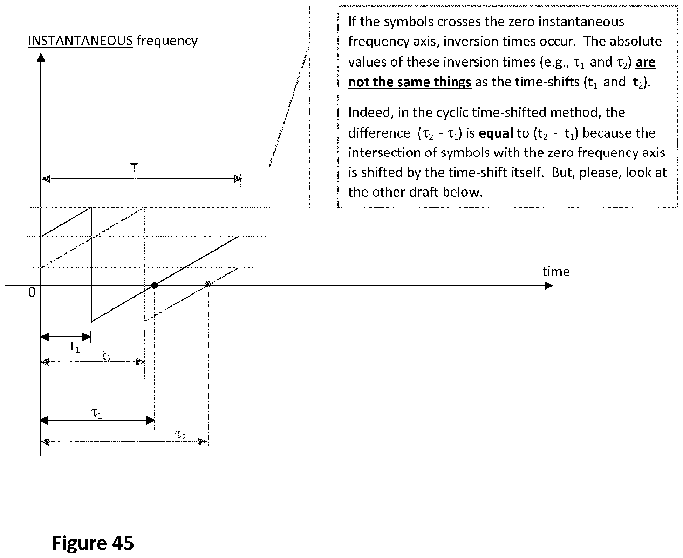

- Figure 45 shows how inversion-time is different to time-shift;

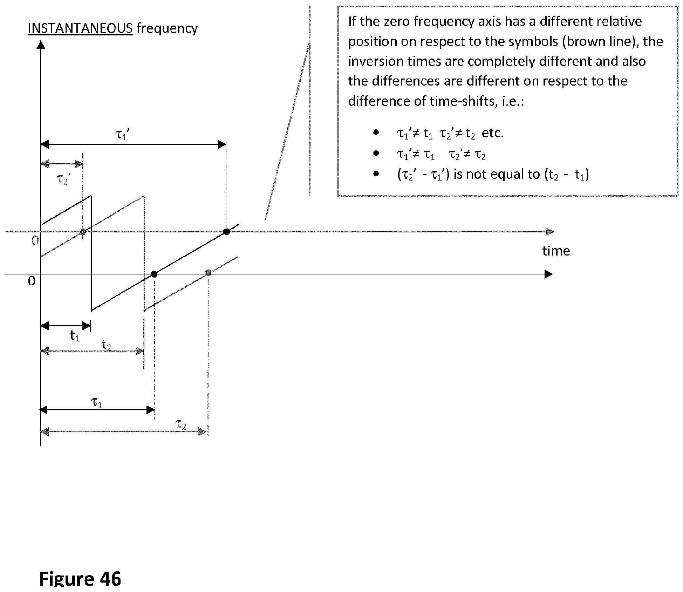

- Figure 46 shows that inversion-time and time-shift are not the same thing;

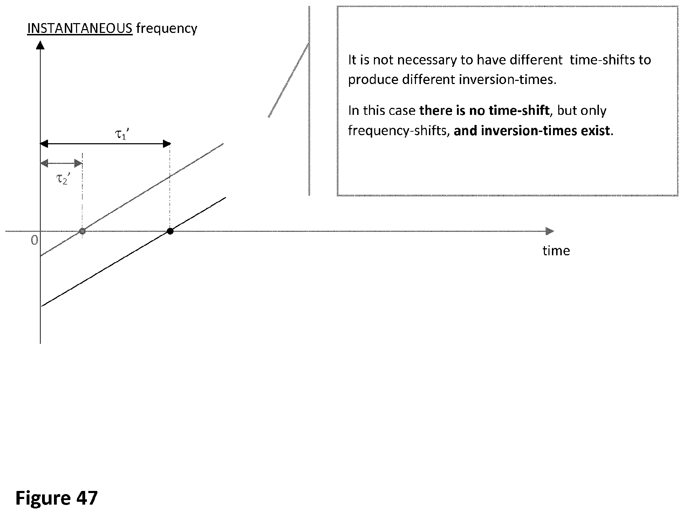

- Figure 47 shows that inversion-time can exist even if there is no time shift in a possible embodiment;

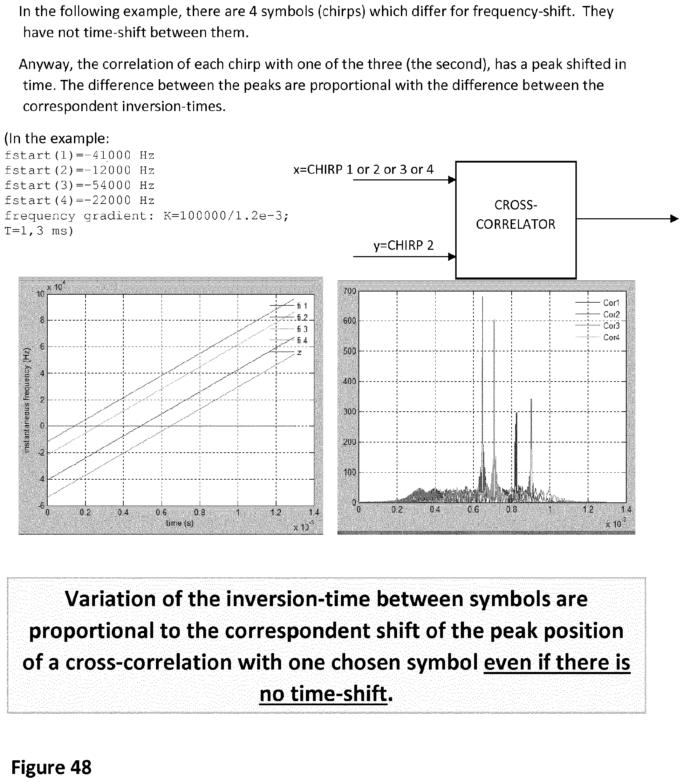

- Figure 48 demonstrates the independence of inversion-time from time-shift using correlators;

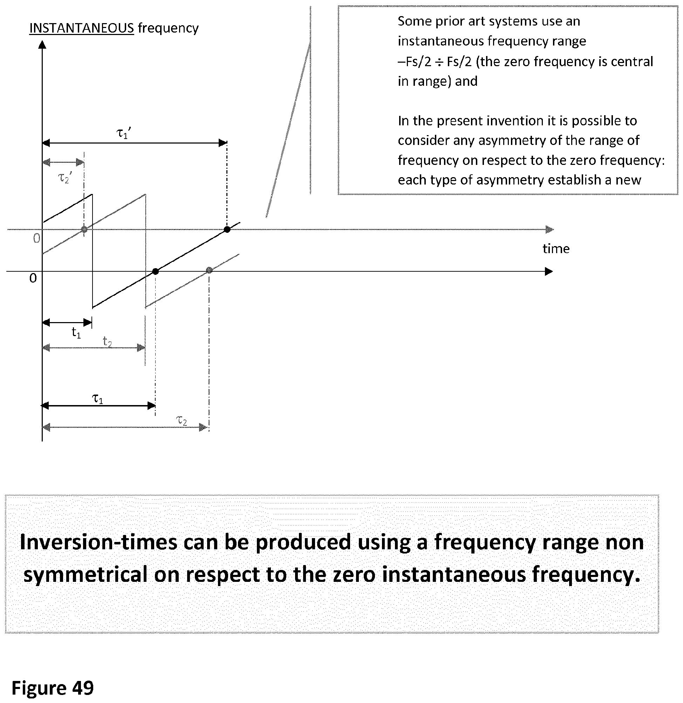

- Figure 49 shows that inversion-times can be produced using a frequency range non symmetrical on respect to the zero instantaneous frequency; and

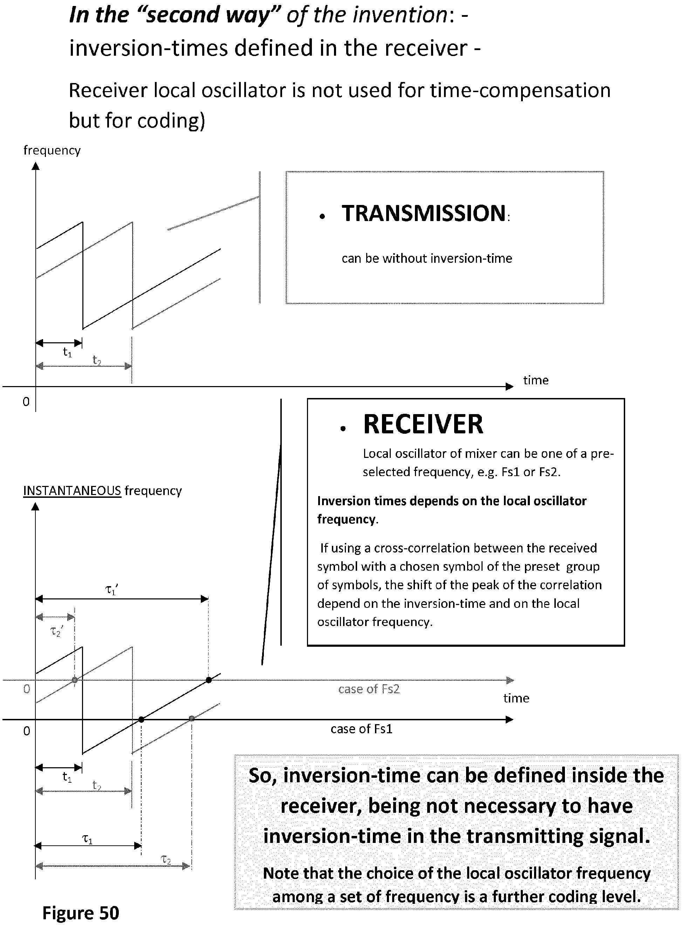

- Figure 50 illustrates a specific embodiment of the "second way" of the present invention.

Detailed description of the invention

As previously mentioned above, the present invention refers to a method of decoding and respectively a transmission system for chirped electromagnetic (or ultrasonic) signals.

The concept that is exploited by the present invention is based on the measurement of the interval of time elapsing from the start of a chirp signal to the instant of time wherein the phasor obtained from the transmitted signal and its quadrature replica (for said first way) or, in a different way, the phasor of the complex envelope obtained from the downsampling of said signal (for said second way) changes the direction of rotation or, equivalently, of the interval of time elapsing from the start of a chirp signal to the moment wherein the instantaneous frequency of said phasor crosses the zero (for said first or second way). This last moment, for the purposes of the present invention, will be hereinafter mentioned as "inversion time", because as it will be clearer from the subsequent description and attached figures, it is the moment wherein the slope of the cumulated phase of the said phasor changes sign. The reason of the aforementioned equivalence resides in the fact that upon the time when rotation direction changes, the cumulated phase gets to a maximum -(for chirp increasing frequencies - or a minimum value - for chirp decreasing frequencies - and the instantaneous frequency, proportional to the derivative of phase, crosses the zero.

In terms of nomenclature, in the present description the inversion time will be referred with the letter $\tau_n$, wherein n, when appearing, will refer to the n-th chirping signal in a set thereof. As well, the instantaneous chirping frequency $f_{i,n}(t)$ will be defined between a maximum frequency and a minimum frequency according to the definition for which it is considered as the derivative of the phase and according to the presence of an inversion time within the time duration of the chirp (for the said first way) or, alternatively, to the presence of an inversion time in the downsampled version of the chirp in the receiver stage (for the said second way).

In the present invention, each symbol, that is associated to a sequence of bits, is univocally associated to a respective frequency variation function of time and it is quantified as the time interval occurring between the start of chirp signal and the inversion time. This univocal association results in a creation of a set of S symbol configurations expressed in terms of inversion times $\tau_n$ ($n$ = 1, ...,$S$) and that can be associated to a binary number, so that the number "b" of bit per symbol is done by the relation:

$$b = \log_2 S.$$

The number of symbol configurations "S" of this set depends mainly on the frequency resolution of the receiving apparatus and on the time/frequency characteristics of the transmitted signal.

A first classification can be done by considering the generation of the chirp: we have to separate the cases in which the chirp is produced and transmitted directly, from the cases in which the chirp is produced as a baseband modulating somehow a carrier wave.

The chirp signal according to the invention can be produced in different methods. In particular, as a first classification, the chirp signal can be directly transmitted as a frequency modulated carrier wave or, in contrast, be used as a baseband modulating somehow a carrier wave.

When being received, the chirp signal s(t) can be subjected to different types of demodulations and can be sampled according to different sample rates for respective embodiments of the receiver stage.

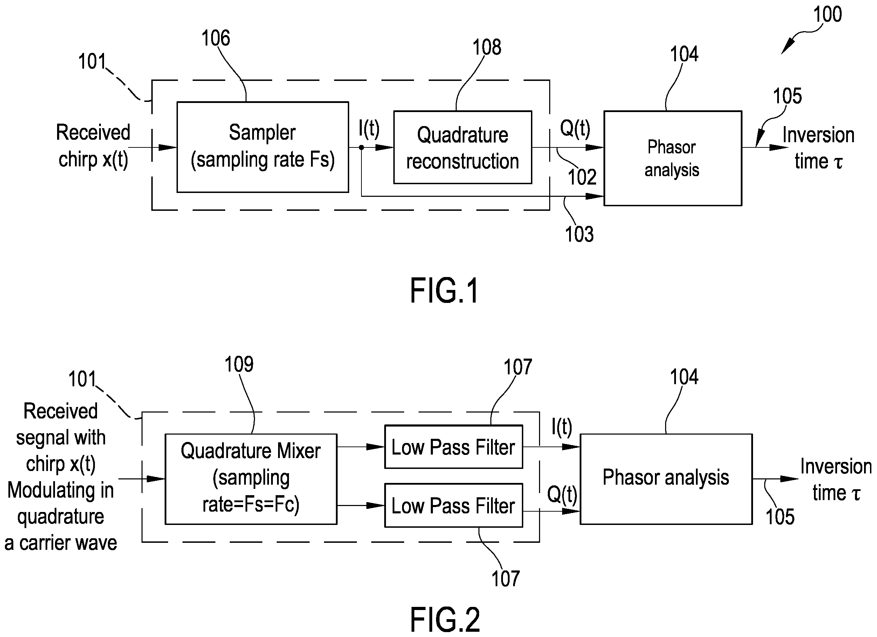

In particular, and with reference to figure 1, the receiver stage according to a first embodiment thereof, performs a sampling of the signal using a sampling rate "$F_s$" much higher than the maximum instantaneous frequency $max\{f_i(t)\}$ of the coding chirp in conformity with the Nyquist theorem, i.e. the sampling frequency being higher than two times the maximum absolute frequency the received signal can have. Here the receiving device 100 comprises a receiver stage 101 properly said, which has an input suitable to be connected to an antenna for receiving a signal and a has two outputs 102, 103 on which respectively the in-phase part I(t) of the signal and the quadrature part Q(t) of the signal are produced. The in-phase and quadrature parts of the received signal are then fed to a phasor rotation analysis stage 104, which processes the inputted signals in order to calculate and produce on the output 105 the inversion time $\tau$ at which, as mentioned before, the instantaneous frequency crosses the zero.

The receiver stage 101 comprises a cascade of a sampler 106, which in turn produces in output the sampled copy of the in-phase signal I(t). Such an in-phase signal I(t) feeds a quadrature reconstruction stage 108 which produces in output the quadrature signal Q(t). In particular, in a non-limitative way, the quadrature can be reconstructed by continuous time-by-time estimation of the period of the in-phase incoming signal and by delivering time-by-time at the Q output the sample of the in-phase signal had a quarter of said period before.

In contrast, figure 2 shows a block scheme of an alternative and non-limiting embodiment of the receiving device 100, conceived for demodulating the in-phase signal I(t) and its quadrature replica signal Q(t), always operating with a sampling rate "$F_s$" much higher than the maximum instantaneous frequency $max\{f_i(t)\}$ of the coding chirp in conformity with the Nyquist theorem, but when the received signals I(t) and Q(t) are the baseband signals modulating a carrier wave so that the receiver can extract their copies.

Here, the receiver stage 101 comprises a cascade of a coherent quadrature mixer 110, having sampling rate $F_s$ equal to the frequency $F_c$ of the carrier, which feeds with its output a couple of low pass filters 107 arranged in parallel from which the copies of the in-phase signal I(t) and quadrature signal Q(t) are obtained; those copies feed a phasor or instantaneous frequency analysis stage 104 which processes the inputted signals in order to calculate and produce on the output 105 the inversion time T at which, as mentioned before, the instantaneous frequency crosses the zero.

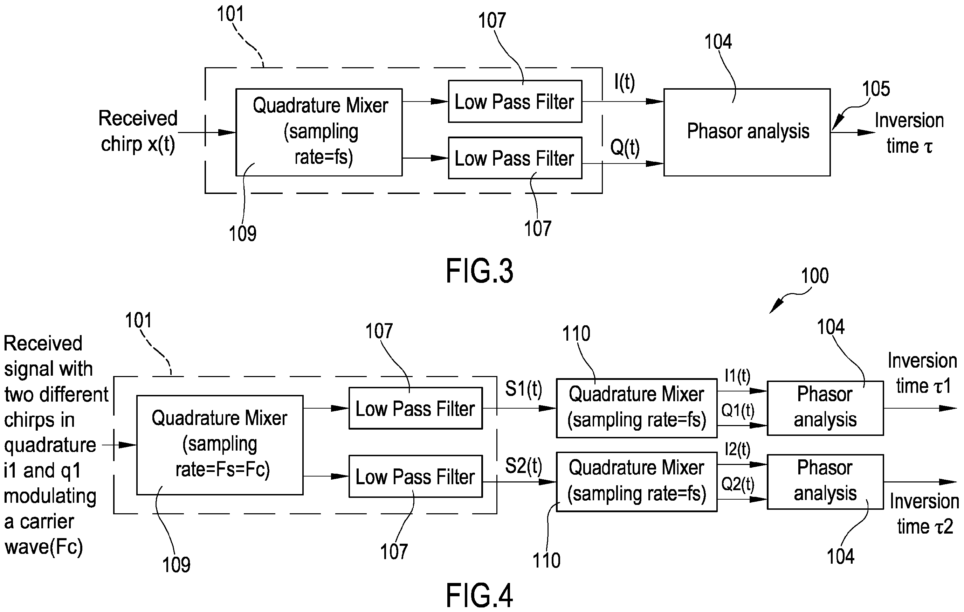

In a further non-limiting embodiment shown in figure 3, the receiving device performs a non-coherent demodulation at a sampling rate fs which is intermediate between the extreme minimum and maximum frequencies of the coding chirp. In particular, the receiver stage 101 comprises a cascade of a quadrature mixer 109, having sampling rate fs which is intermediate between the extreme minimum and maximum frequencies of the coding chirp, which feeds with its output a couple of low pass filters 107 arranged in parallel from which the in-phase signal I(t) and quadrature signal Q(t) are obtained; those signals feed a phasor or instantaneous frequency analysis stage 104 which processes the inputted signals in order to calculate and produce on the output 105 the inversion time $\tau$ at which, as mentioned before, the instantaneous frequency crosses the zero.

In this case, at the output of the low-pass filter, the complex envelope:

$$y(t) = i(t) + jq(t) = |y(t)|e^{j\varphi(t)}$$

is available for numeric processing so that the phasor rotation or the instantaneous frequency:

$$f_i(t) = \frac{1}{2\pi}\frac{d\varphi(t)}{dt}$$

can be calculated. In this case the inversion time occurs when the instantaneous frequency of the incoming chirp X(t) feeding the stage 109 becomes equal to $f_s$.

A further embodiment of the receiving device 100 (Figure 4) relates to the case of a baseband consisting of a couple of different chirps separated by the orthogonality of a quadrature modulation. In other words, the receiving device is fed with a signal having two different chirps in quadrature $i_1(t)$ and $q_1(t)$ modulating a carrier wave having frequency $F_c$. Here, receiver stage 101 comprises a cascade of a coherent quadrature mixer 109 having sampling frequency Fs equal to the frequency Fc of the carrier wave and feeding with its two outputs a couple of low pass filters 107 arranged in parallel, which in turn produce on their outputs a couple of intermediate signals $s_1(t)$ and $s_2(t)$ fed in input of a respective non-coherent quadrature mixer 110 whose sampling rate fs is intermediate between the extreme frequencies of the coding chirp. Each quadrature mixer 110 produces on its outputs a first, second set of in-phase and quadrature signals $I_1(t)$, $Q_1(t)$ (produced from $i_1(t)$) and $I_2(t)$, $Q_2(t)$ (produced from $q_1(t)$). Those four signals are sent in input to two phasor or instantaneous frequency analysis stages 104, the first of which receives the first set of in-phase and quadrature signals $I_1(t)$, $Q_1(t)$ while the second receives the second set of in-phase and quadrature signals $I_2(t)$, $Q_2(t)$. The phasor or relative frequency analysis stages 104 respectively process its inputted signal so as to produce in output a first, second inversion time $\tau_1$, $\tau_2$ respectively associated to the two different chirps in quadrature.

In other word, in said second way, each chirp is set with a own law of frequency variation that permits to produce an own inversion time when it is down-sampled at a pre-determined sampling frequency within the minimum and maximum of the chirp frequency. Of course, it is possible to use the said first way of encoding inversion time, in which each chirp is set with an own law of frequency variation that produce directly an own inversion time within the symbol time, but in this case, the block 110 of figure 4, shall be substituted by the block 101 as in figure 1.

The following table 1 reports some non-limiting examples of equations ruling the instantaneous frequency and equations for a set of chirps, when the sampling rate "$F_s$" is much higher than the maximum instantaneous frequency $max\{f_i(t)\}$ (first way).

| Table 1 - $F_s \gg max\{f_i(t)\}$ (first way) | | |
| --- | --- | --- |
| **Instantaneous frequency equation** | **Equation of chirp** | **Setting to fit the inversion-time at $t = \tau_n$** |
| LINEAR $f_{i_n}(t) = f_{0_n} \pm k_n t$ | $s_n(t) = \sin\left[2\pi\left(f_{0_n}t \pm \frac{k_n}{2}t^2\right)\right]$ | $k_n = \mp \dfrac{f_{0_n}}{\tau_n}$ |

(continued)

| Table 1 - $F_s \gg max\{f_i(t)\}$ (first way) | | |
|---|---|---|
| **Instantaneous frequency equation** | **Equation of chirp** | **Setting to fit the inversion-time at $t = \tau_n$** |
| POLINOMIAL $f_{i_n}(t) = \sum_{p=0}^{P} f_{p_n} t^p$ | $s_n(t) = sin\left[2\pi \sum_{p=0}^{P} f_{p_n} \left(\frac{t^{p+1}}{p+1}\right)\right]$ | $\sum_{p=0}^{P} f_{p_n} \tau_n{}^p = 0$ |
| SPECIAL EXPONENTIAL $f_{i_n}(t) = f_{0_n} e^{-\frac{t}{\tau_n}}\left(1 - \frac{t}{\tau_n}\right)$ | $s_n(t) = \sin\left[2\pi f_{0_n} t e^{-\frac{t}{\tau_n}}\right]$ | **No setting is necessary:** $f_{i_n}(\tau_n) = 0$ **always** |

The following table 2 reports some non-limiting examples of equations ruling the instantaneous frequency and equations for a set of chirps, when the sampling rate $f_s$ is intermediate between the extreme frequencies (minimum and maximum) of the coding chirp corresponding to the second way disclosed in the summary of the invention.

| Table 2 - $max\{f_i(t)\} > f_s > min\{f_i(t)\}$ (second way) | | |
|---|---|---|
| **Instantaneous frequency equation after quadrature mixing** | **Equation of chirp** | **Setting to fit the inversion-time at t = $\tau_n$** |
| LINEAR $f_{i_n}(t) = \left(f_{0_n} - f_s\right) \pm k_n t$ | $s_n(t) = \sin\left[2\pi\left(f_{0_n} t \pm \frac{k_n}{2} t^2\right)\right]$ | $k_n = \mp \frac{\left(f_{0_n} - f_s\right)}{\tau_n}$ |
| POLINOMIAL $f_{i_n}(t) = \sum_{p=0}^{P} f_{p_n} t^p - f_s$ | $s_n(t) = sin\left[2\pi \sum_{p=0}^{P} f_{p_n} \left(\frac{t^{p+1}}{p+1}\right)\right]$ | $\sum_{p=0}^{P} f_{p_n} \tau_n{}^p = f_s$ |
| EXPONENTIAL $f_{i_n}(t) = f_{0_n} b^t - f_s$ | $s_n(t) = \sin\left[2\pi f_{0_n}\left(\frac{b^t - 1}{ln(b)}\right)\right]$ | $\ln(f_{0_n}) = -\tau_n \ln(b) + \ln(f_s)$ |

It is important to notice that with a sampling rate $f_s$ intermediate between the extreme frequencies (minimum and maximum) of the coding chirp the law of phase variation of the original chirp at high frequency could not produce any inversion time during the symbol time (so it is not applicable the first way to extract an inversion time), but its complex envelope recovered after downsampling still produces the right inversion time.

With special reference for a special exponential law, it can be inferred that generally, the exponential law of frequency variation assumes the form:

$$f_i(t) \propto f_0 e^{\frac{-t}{\tau}}\left(1 - \frac{t}{\tau}\right)$$

Note that, in this case, the equation itself guarantees that no constraint has to be applied to the start frequency or to the frequency gradient to produce the inversion time, as $f_i(\tau) = 0$ always.

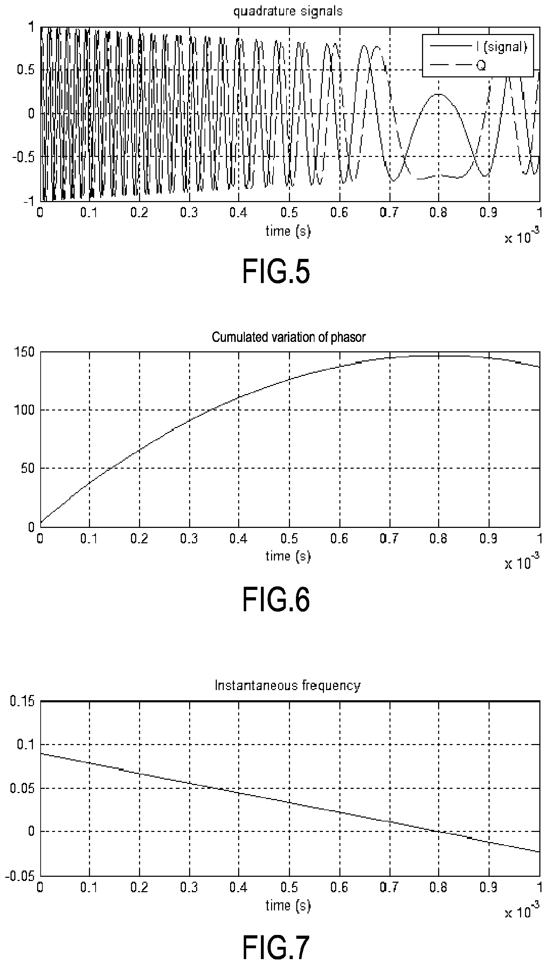

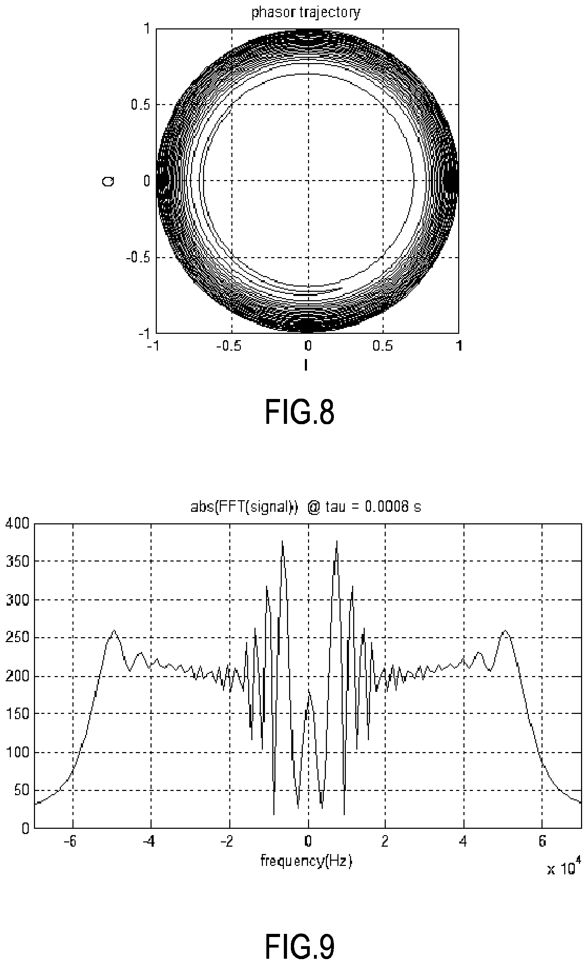

Figures 5-9 show a first example of linear chirp signals used to biunivocally encode a symbol comprising a sequence of bits. In detail, figure 5 shows a first in-phase I(t) signal and a second in-quadrature Q(t) signal chirped with a predetermined law of frequency variation that in this case is linear. As it can be seen in figure 5, the cumulated phase of the phasor I(t)+jQ(t) increases over the time up to arriving at a moment wherein the phase time variation with respect to the previous instant t-dt changes in sign so that said cumulated phase decreases and, in the non-limiting example here disclosed corresponding to 800us, wherein the direction of the phasor of the complex envelope changes direction. This fact is clearly represented in figure 8. In figure 7, the instantaneous frequency which is the derivative of the cumulated angle of the phasor, crosses the zero at the same instant of time where the slope of the phasor is zero. As per figure 9, it is shown that most of the frequency spectrum of the signal, according to a fast Fourier transform, is included in the range [-20kHz - 20kHz].

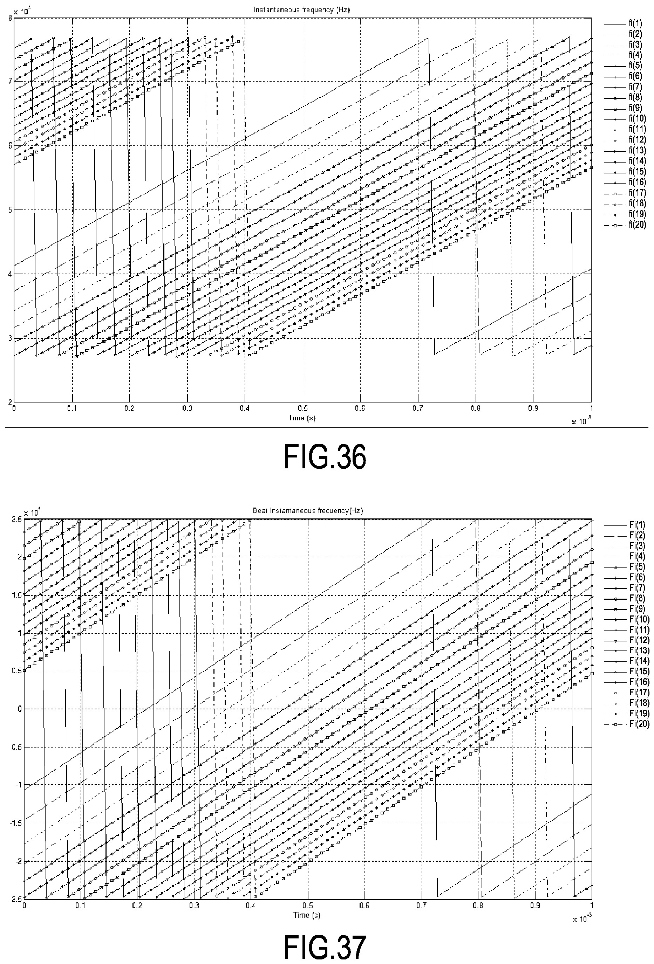

Applicant has found that in the second way of demodulating the chirp signals by means of a sampling rate $f_s$ which is intermediate between the extreme frequencies (minimum and maximum) of the coding chirp, in which the generator high frequency chirp does not show any inversion time, the coding is not transparent for a possible sniffer when it is transmitted. The Applicant has advantageously found that the inversion time appears only after a process of mixing in the receiver at a specific sampling frequency that is known only to the producer; in fact, considering also the case in which the set of generator chirps is obtained by time\frequency shifting a first generator chirp, if trying to mix at a sampling frequency of trial, different from the sampling frequency chosen by the producer, the resulting inversion times are altered (shifted by a constant value for some symbols of the said set or shifted by this constant value plus another constant values for the other symbols of set), leading an unauthorized receiver to a very cumbersome data decoding. To understand this behavior, it could be considered a vertical shift of the time axis of figure 37 (the axis of zero instantaneous frequency), in order to reproduce a downconversion with a different fs.

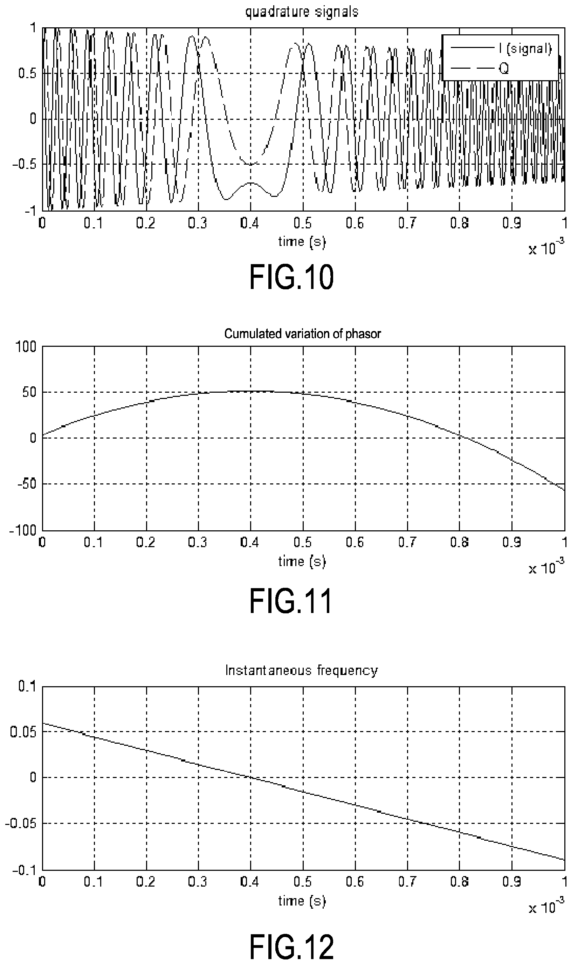

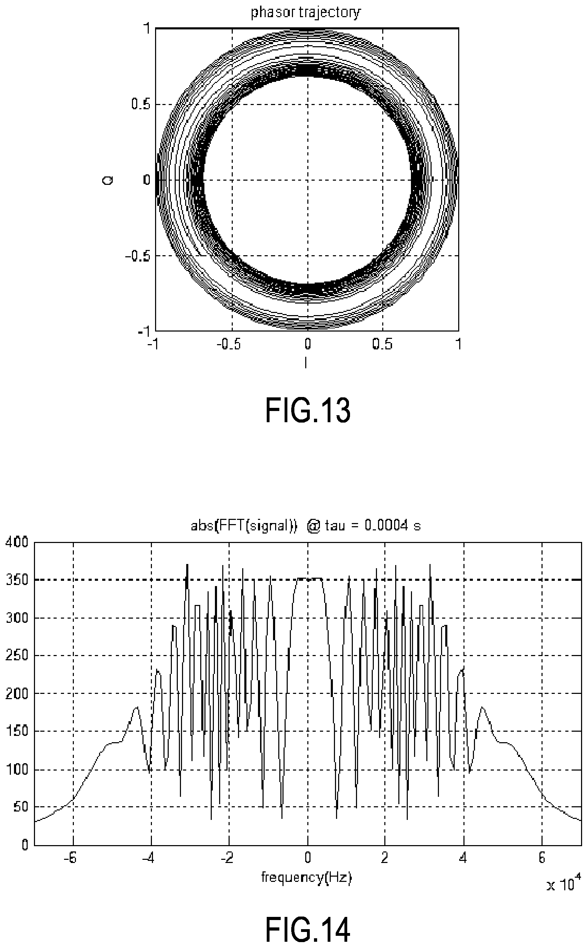

Figures 10 - 14 show a second example of linear chirp signals used to biunivocally encode a symbol comprising a sequence of bits. In detail, figure 10 shows a first in-phase I(t) signal and a second in-quadrature Q(t) signal chirped with a predetermined rule of frequency variation that in this case is linear. As it can be seen in figure 10, the phase of the phasor I(t)+jQ(t) increases over the time up to arriving at a moment, corresponding to 400us, wherein the direction of the phasor of the complex envelope changes direction. This fact is clearly represented in figure 11. In figure 12, the instantaneous frequency which is the derivative of the angle of the phasor, crosses the zero at the same instant of time. As per figure 14, it is shown that most of the frequency spectrum of the signal, according to a fast Fourier transform, is included in the range [-45kHz - 45kHz].

The following table resumes the parameters for the two examples of figures 5-9 and 10-14 respectively.

| *Table* 3 | | Figures 4-8 | Figures 9-13 |
|---|---|---|---|
| Duration: | $T$ | 1ms | 1ms |
| Inversion-time | $\tau$ | 800 us | 400 us |
| Starting frequency | $f_0$ | 57000 Hz | 38000 Hz |
| Rate of frequency shift | $k = \dfrac{-f_0}{\tau}$ | $-7,125 \cdot 10^7 Hz/s$ | $-9,5 \cdot 10^7 Hz/s$ |
| Chirp equation | *I(t),*  *Q(t)* | $I(t) = \sin\left[ 2\,\pi\;(f_o\,t + \dfrac{k\,t^2}{2}) \right]$  $Q(t) = \sin\left[ 2\,\pi\;(f_o\,t + \dfrac{k\,t^2}{2}) - \dfrac{\pi}{2} \right]$ | |
| Sampling frequency | Fs | 1 MHz | |

If transmitted, the transmitting device encodes a sequence of symbols with different chirps characterized by having a respective biunivocal relation with an inversion time (in said first or second way).

In many cases, some care could be due in order to maintain the same bandwidth and for guaranteeing a great discrimination in a matched filter between different configurations.

Resuming, as per the transmission of the coded signal, the following cases apply. In a first direct case (first way), the in-phase component of the chirp signal is directly the signal which is transmitted by the transmitter in such a case, the in-quadrature component of the signal can be re-built by the receiver device 100 from the received chirp, to the end of obtaining the phasor of the complex envelope and identify the phase inversion.

In a second alternative case (extension of first way), the in-phase and in-quadrature components of the signal are produced in advance as a baseband modulating a carrier wave by means of a higher frequency by means of a quadrature modulator. In this second case, the received signal is demodulated by means of a quadrature demodulator and the complex envelope is treated in the same way as in the previous first case.

In a third alternative case (second way), the chirp signal is transmitted directly and received by a complex non-coherent mixer feeding a Low Pass Filter with a bandwidth fitting the chirp bandwidth or, in an equivalent way, by a sampler providing a sampling frequency $f_s$ whose frequency is intermediate between the extremes of the chirp frequency band. The mixer (or sampler) generates a complex envelope of a chirp featuring a frequency which is lower than the transmitted one and its phasor inversion time can be detected.

In a fourth alternative case that hereinafter will be mentioned as an "extension way", the baseband modulates a carrier wave but the in-phase and in-quadrature components are different chirps. The received signal is demodulated initially by means of a coherent quadrature demodulator so as to re-obtain the two different components above; subsequently, the two components are demodulated separately by two non-coherent quadrature demodulators (for the said second way), or the aforementioned sampler (for the first way), in order to obtain the complex envelope of each symbol. At this stage, from each complex envelope the phasor inversion time is detected.

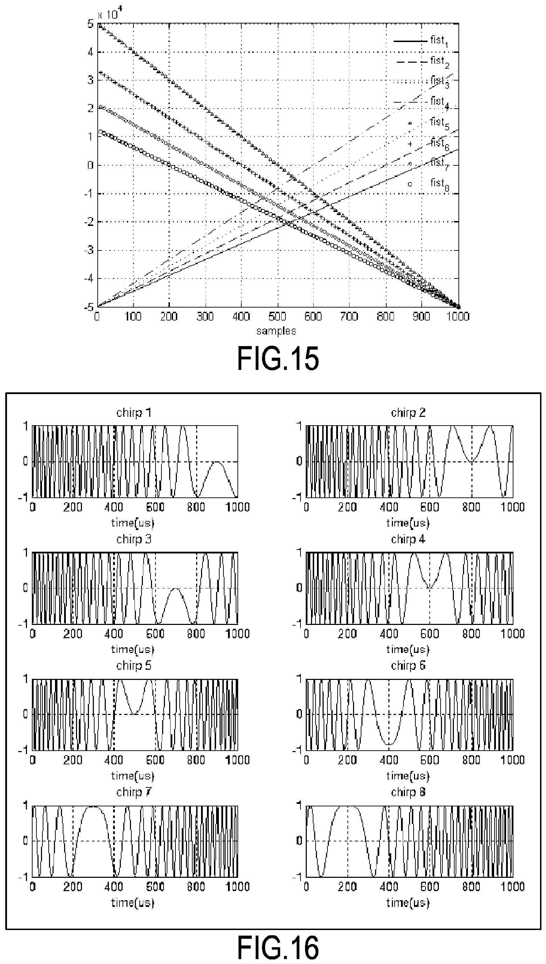

Resuming, according to the method of coding a signal, there is at least a first in-quadrature signal which is a chirp type signal (said first way) and has an instantaneous frequency variation law which permits to produce an inversion time within the chirp application time interval (symbol time), or, alternatively, there is at least one chirp (said second way) that not necessary produces an inversion time within the symbol time and whose downsampled version at a predetermined sampling frequency within the minimum and maximum chirp frequency, comprising an inversion time wherein the phasor of the complex chirp version (first way) of the at least a first in-phase signal or the phasor of the downsampled complex envelope (second way) changes direction of rotation or, equivalently, wherein the instantaneous of the said phasor passes through zero. Figures 15 and 16 show an example (of said first way) of a set of 8 chirps with linear frequency variation over time, each one having an own inversion time $\tau_n$, which is stepped and occurs within the time symbol; in particular for the present example the chirps are stepped 100us each other, while letting the symbol time being fixed to 1ms. The set of chirps according to figures 15 and 16 respect the constraint set out in table 1 and possess the features discloses in the following table.

| *Table* 4 | | |
|---|---|---|
| **Number of symbols** | **S** | 1 |
| **Number of symbol configurations** | **N** | 8 |
| **Number of bits per symbol** | **b** | $b = \log_2 8 = 3$ |
| **Symbol duration** | **T** | 1 *ms* |
| **Inversion-time (for each configuration)** | $\tau_n$ | $\tau_n = T - n \cdot 100\ \mu s, n = 1, \dots 8$ |
| **Starting frequency (for each configuration)** | $f_{0_n}$ | $f_{0_n} = -50000\ Hz, for\ n = 1, \dots, 4$ $f_{0_n} = \dfrac{50000}{(\frac{T}{\tau_n} - 1)}\ Hz, for\ n = 5, \dots, 8$ |
| **Rate of frequency shift (for each configuration)** | $k_n$ | $k_n = -\dfrac{f_{0_n}}{\tau_n},\ \ n = 1, \dots, 8$ |
| **Instantaneous frequency equation** | $f_{ist_n}(t)$ | $f_{ist_t}(t) = f_{o_n} + k_n\, t$ |
| **Chirp equation** | $I_n(t) = X_n(t)$ | $X_n(t) = \sin\left[2\,\pi\,\left(f_{o_n}\,t + \dfrac{k_n\,t^2}{2}\right)\right]$ |
| **Sampling frequency** | **Fs** | **1MHz** |

Of those 8 chirps, the first four preferably have a negative frequency slope, meaning that their instantaneous frequency $f_i(t)$ decreases over the time, while the second four preferably has a positive frequency slope, meaning that their instantaneous frequency $f_i(t)$ increases over the time.

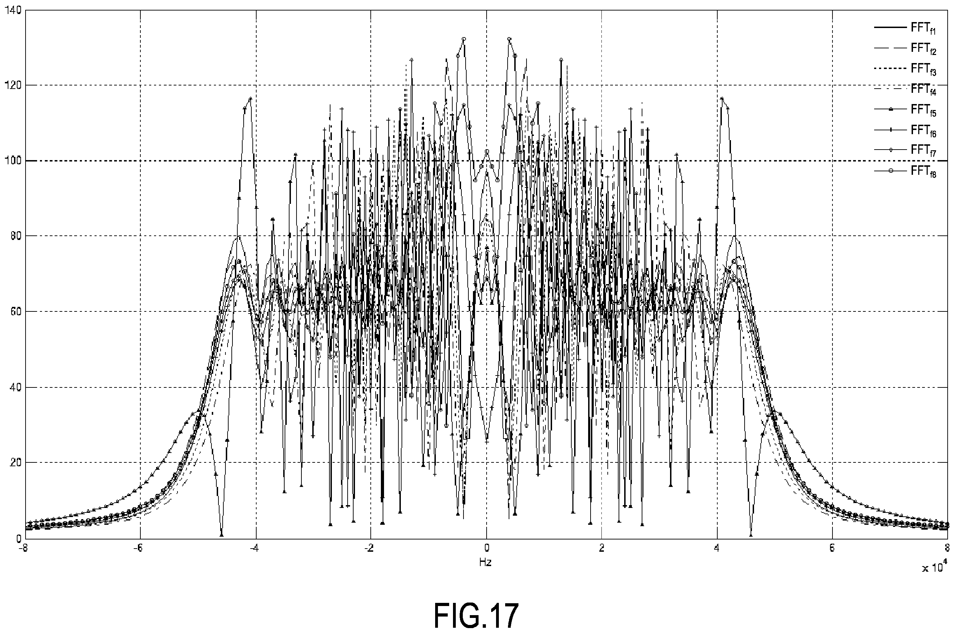

With a set of eight chirp signals, each of them can be biunivocally associated to a symbol comprising three bits, so that, in a non-limiting example, a binary code sequence or stream 101111000 can be produced by sequencing three chirps. The applicant has chosen the above set of 8 chirp signals in order to advantageously keep the same minimum or maximum frequency for each of said 8 chirp signals and in order to provide an almost constant bandwidth occupation independently of which chirp is selected for transmission among the set of 8, as shown in figure 17, that represents the fast Fourier transform thereof.

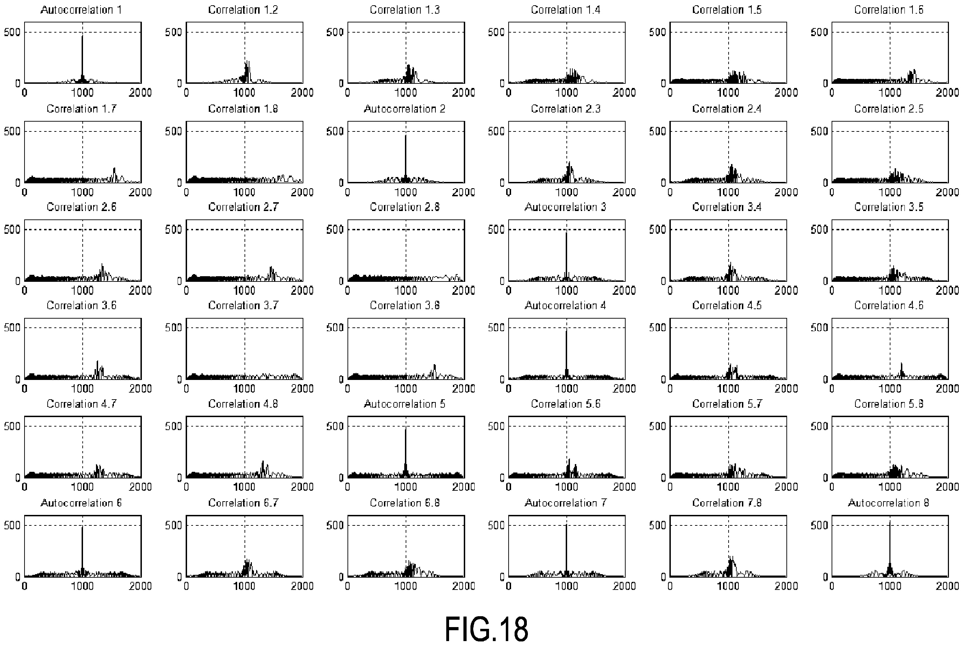

The Applicant has found that variating the slope or gradient of the instantaneous frequency of each of the different chirps, provides for an advantageous reduction in cross-correlation levels while letting the auto-correlation of each chirp of the set be significantly higher. Figure 18 shows those features. This advantageously results in an increased discrimination capacity in a matched filter, which is less prone to misinterpret symbols laying beneath each of the chirps due to electromagnetic noise eventually received at the receiver stage. In this non-limiting example, if the Applicant, for cost reasons, would not intend to use a set of correlators to compare the receiver symbol with a copy of each predetermined symbol, he could be aware to exploit the fact that each symbol is univocally associated to an inversion time occurring within the symbol-time, and this inversion time could be detectable after reconstruction of the quadrature replica of the chirp itself using a much higher sampling rate than the maximum of the chirp frequencies, so that the phasor could be recovered to analyze its rotation directly at the chirp frequencies.

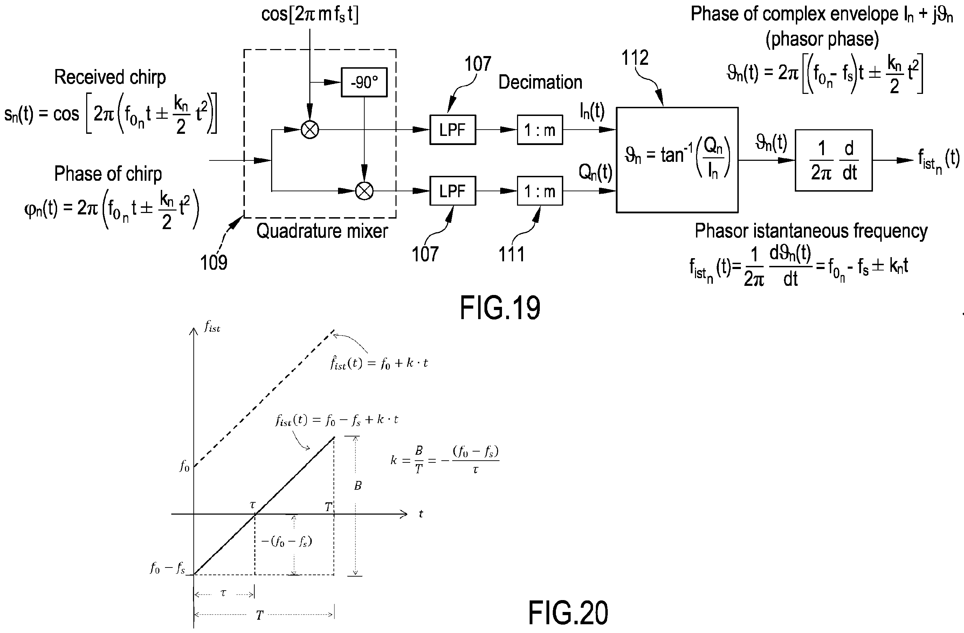

Leaving the case of the previous application of the said first way of producing inversion time, the Applicant points out that also that, in said second way, the inversion time can be produced also starting from a chirp that does not produce any inversion time satisfying the conditions set out in table 1, $\tau_n = -\dfrac{f_0}{k}$ within the symbol time "T" if considering the phasor at the chirp frequencies, for example, due the high value of the starting frequency $f_0$, but, in case of a receiving device 100 having a sampling frequency $f_s$ intermediate between the minimum and maximum frequency of the chirp, the angular frequency of the phasor of the complex envelope is stepped to a lower value so that the inversion time $\tau_n = -\dfrac{(f_0 - f_s)}{k}$ satisfying the conditions set out in table 2, can occur within the symbol time. In particular, let's consider the mixing and subsequent low-pass filtering respectively produced by the quadrature mixer 109 and low pass filters 107 in a non-coherent mixer, and apply the trigonometric product to sum formula to the mixer product. As can be seen from figure 19, having a chirp signal with linear frequency variation and waveform responding to

$$s_n(t) = \sin\left[2\pi\left(f_{0_n}t \pm \frac{k_n}{2}t^2\right)\right]$$

which has argument:

$$\varphi(t) = 2\pi\left(f_{0_n}t \pm \frac{k_n}{2}t^2\right)$$

after the non-coherent mixer 109, here shown as being fed with a reference frequency cos $(2\pi f_s t)$ preferably but in a non-limiting extent generated by a stable local oscillator, after the low pass filtering 107 of both the in-phase and quadrature branches in output of the non-coherent mixer, and after a decimation provided by decimation stages 111 arranged in series to each low pass filter 107, the n-th retrieved in-phase and quadrature component $I_n(t)$, $Q_n(t)$ the phasor or relative frequency analysis stage performs the following calculation $\tan^{-1}\left(\dfrac{Q_n}{I_n}\right)$, retrieving the phase

$$\vartheta_n(t) = 2\pi\left[(f_{0n} - f_s)t \pm \frac{k_n}{2}t^2\right]$$

Provided that the instantaneous frequency is the time derivative of the above phase divided by $2\pi$, the following instantaneous frequency over time for the signal is obtained by means of a derivation stage arranged in series to the output of the phasor or relative frequency analysis stage 104:

$$f_i(t) = \frac{1}{2\pi}\frac{d\vartheta_n(t)}{dt} = f_{0n} - f_s \pm k_n t$$

As it can be seen from the above equation, the inversion time of the slower chirp signal produced by the down-sampling occurs at time $\tau$, thereby satisfying the conditions set out in table 2. The same consideration can be obtained by considering figure 20, wherein the instantaneous frequency variation vs. time is represented. Here, both the instantaneous frequency $\hat{f}_i(t)$ of the generator chirp and of the downsampled chirp $f_i(t)$ are shown, being evident that the generator chirp does not produce any inversion time whereas the down-sampled version does. The slope of the straight line, $k = \dfrac{B}{T}$, for the principle of equivalence of triangles is the same as $-\dfrac{f_0-f_s}{\tau}$, thereby satisfying the relation for inversion time of the Table 2. Thus, the generating chirp and its down-sampled version have the same instantaneous frequency gradient k, but the down-sampled version has the absolute values of frequency stepped by the sampling frequency $f_s$, so that the linear curve of the instantaneous frequency versus time can cross the zero value at the instant equal to the inversion time $\tau_n$.

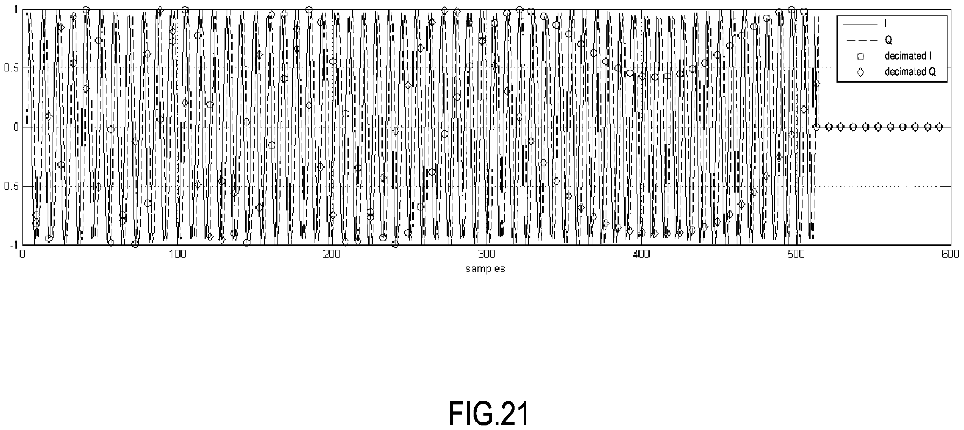

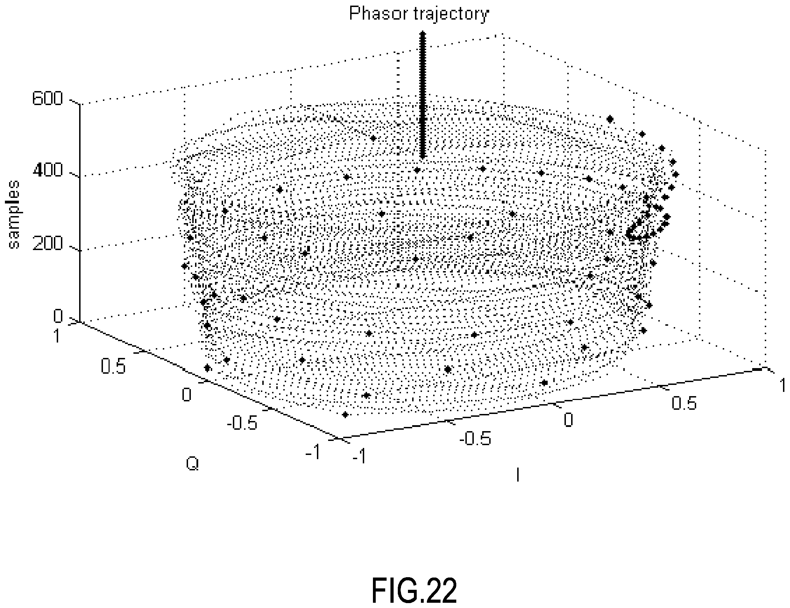

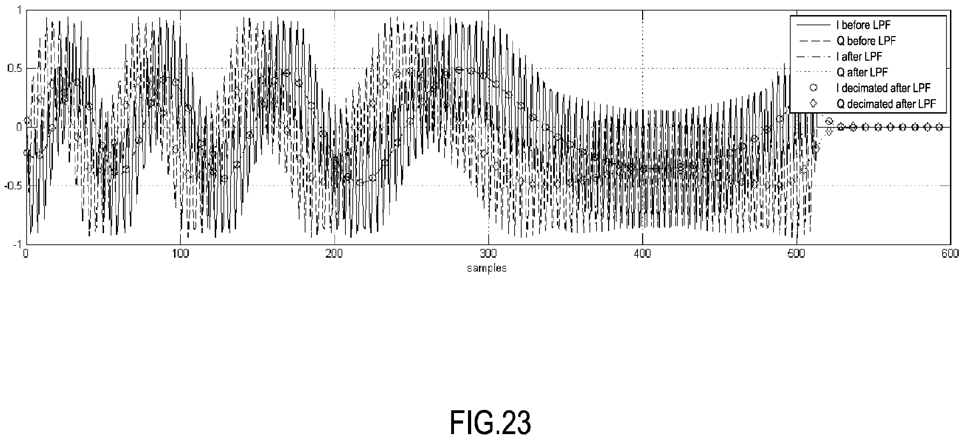

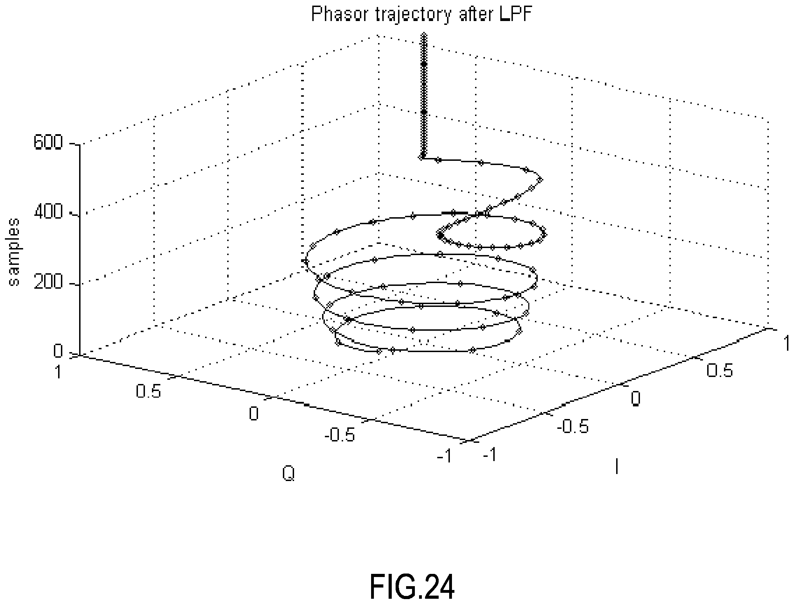

Figure 21 shows a representation of an example of a first in-phase and second in-quadrature replica of first in-phase signal according to the invention, represented together with their respective decimated parts that corresponds to the down-samples at $f_s$. As it can be seen from the diagram, the inversion time $\tau$, in this case corresponding to the 409-th sample (409 us), is recognizable from the "long valleys" tracked by the in-phase and in-quadrature down-samples, even if their high-sampled version, reproducing copies of the original generator in-phase chirp and its quadrature replica, do not show any "long valley". The same consideration applies when considering the diagram of figure 22. Figures 23 and 24 show a representation of the mixer outputs together with the subsequent filtered version (after low-pass filter) produced from the same generator chirp used for plotting diagrams of figures 21, but demodulated by means of a quadrature detector as for the non-limiting embodiment of the invention at Figure 19. Also in this case, the inversion time $\tau$ is still kept at 409us.

According to a preferred but non-limiting embodiment of the invention, the receiver stage 101 comprises synchronizing means advantageously designed to adapt with a preamble at a fixed frequency attached at the beginning of the code sequence. Furthermore, a short junction of phase shifting the inversion time, provided that this remains under the tolerance of the predefined stepping - in the aforementioned 100us - can be considered in order to reduce the spreading of bandwidth provided by the abrupt phase change.

The present set of 8 chirp signals can be demodulated using a number of matched filters equivalent to the number of chirps for the set.

Advantageously, using a chirped signal to encode and decode a set of symbols allows for having a pulse compression wherein the spreading of frequencies that is typical of a chirped signal, in a matched filter in the receiver produces a time shrinking that allows to improve the resolution in radar applications. Consequently, having an increase in the amplitude of the received pulse, great noise rejection is achieved. Especially for the present invention, the above features synergistically operate with a set of low cross-correlated signals, i.e. instantaneous frequency variation laws and inversion times as described above, that are biunivocally paired with a respective symbol, further allows a better discrimination of a specific symbol lowering the error rate at the receiver also in case of significant perturbations and/or disturbs in the received signal.

The receiver stage can have alternatively:

- as many correlators as the number of symbols to detect, so that to be capable to discriminate each symbol in the set of symbols in real time; or
- a single correlator comprising scanning means for scanning the correlation of the received symbol with the whole set of symbols, one symbol at a time, and selecting as the actual symbol received the one producing the maximum correlation. This architecture requires great complexity in order to buffering the incoming signal and significant processing power in order to scan all the symbols as fast as possible.
- a preferable single correlator requiring only one fixed symbol pattern to be correlated to the incoming received signal (or, alternatively its downsampled complex envelope) data stream, further comprising synchronization means for taking a "snapshot" of correlation for overlapping signal with pattern exactly within a whole symbol time and comprising means to detect the position of the peak of the resulting correlation. This architecture can be implemented with lower cost than the previous ones above, but it requires a method to generate a set of symbols whose reciprocal cross-correlations present a peak in different positions.

In order to exploit the latter of the previous architectures, and in order to have a receiver device 100 suitable to correctly detect the received symbol in real time and with significant cost reduction, the chirps are built by circularly time-shifting a single generator chirp, which is associated to a specific phasor inversion time, around its array length.

Given D as the chirp length, i.e. the number of digital samples forming the chirp, each time shift is carried out by right or left shifting all the samples by a certain number of positions and then by performing a step of filling the left positions in one side of the array with samples rolling off the other side of the array, in the same way as a closed loop shift register. The time shifting of a chirp is biunivocally correlated with a corresponding shifting of the inversion time $\tau$.

The applicant has chosen a way different to the known Zafoff-Chu sequences to allocate time shifting of the sequences. In particular, according to the present invention, no complex sequences are used: instead, real chirps are used so as to advantageously exploit the complex envelope to double the data stream. In detail, the doubling of data stream is achieved by using a complex quadrature independent encoding, i.e. using two different chirps in quadrature at the same time (as for the extension), and two correlators in the receiver, one for the in-phase part and the other for the in-quadrature part.

According to a non-limiting possible embodiment (first way), therefore, at first a generation chirp is generated at the transmitter stage, and this generation chirp is then time shifted. With the time shifting of the generation chirp, also its start frequency is changed; thereby there is a biunivocal relation between the shifting time of the generation chirp and the shifting starting frequency that the shifted chirp has respective to the generation chirp. The relation of the shifting for the inversion time of each shifted chirp still follows table 1, considering different starting frequency $f_{0_n}$ for each symbol.

Advantageously, in order to maintain the same frequency bandwidth and occupation for each chirp, according to the invention there is also a circularity of the instantaneous frequency. As per "circularity of the instantaneous frequency" shall be meant that there is a jump in the instantaneous frequency $f_i(t)$ the chirp has, and the jump - in correspondence of the maximum/minimum frequency of the band - achieved in a way conceptually equal of the circularity of the time shifting. Having a jump in correspondence of the maximum/minimum instantaneous frequency provides for having a correspondent jump of phase $\pm 2\pi Bt$.

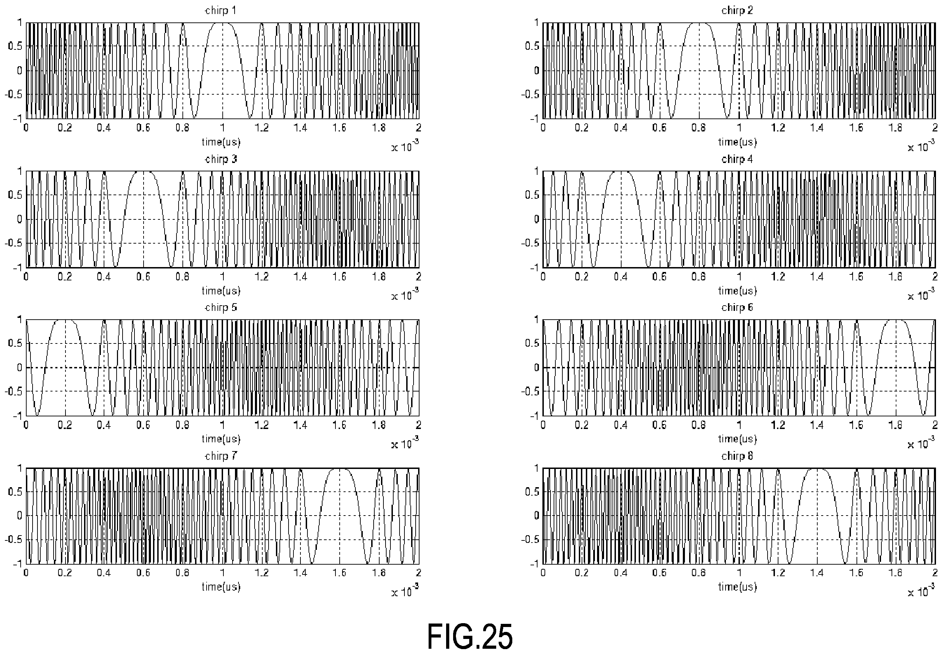

Figure 25 shows a set of 8 circularly shifted chirp signals, $s_1(t), s_2(t), ..., s_8(t)$ each one representing a symbol configuration each one having an own inversion time. The above set of 8 circularly shifted chirp signals follow the laws according to the following table.

*Table 5*

| QUANTITY NAME | SYMBOLS AND EQUATIONS | QUANTITY VALUE |
|---|---|---|
| Instantaneous Frequency band | B | 50 kHz |
| Chirp Duration | T | 2000 us |
| Time-resolution | *dt* | 100 ns |
| Frequency rate | $$k_n = \frac{B}{T}$$ | 50000000 Hz/s |
| Starting frequency | $f_{0_n}$ | {-50kHz, -40kHz, -30kHz, -20kHz, -10kHz, 10kHz, 20kHz, 30 kHz} |
| Inversion-times | $$\tau_n = -\frac{f_{0_n}}{k_n}, n \leq 5$$ $$\tau_n = -\frac{(f_{0_n} - B)}{k_n}, n > 5$$ | {1000 us, 800 us, 600 us, 400 us, 200 us, 1800 us, 1600 us, 1400 us} |
| Instantaneous frequency base-equation (without circularity) | $$f_{i_n} = f_{0_n} + k_n t$$ | |
| Chirp equations | $$\sin\left[2\pi\left(f_{0_n}t + \frac{k_n}{2}t^2\right)\right], for\ t\ when\ \left\|f_{i_n}(t)\right\| < F$$ $$\sin\left[2\pi\left(f_{0_n}t + \frac{k_n}{2}t^2 - Bt\right)\right], for\ t\ when\ \left\|f_{i_n}(t)\right\| > F$$ | |

(continued)

| QUANTITY NAME | SYMBOLS AND EQUATIONS | QUANTITY VALUE |
|---|---|---|
| **Frequency jumps occurrences** | $$t_{jump_n} = \tau_n + \frac{T}{2}, \qquad n \leq 5$$ $$t_{jump_n} = \tau_n - \frac{T}{2}, _{n > 5}$$ | **{None, 1800 us, 1600 us, 1400 us,** **1200 us, 800 us, 600 us, 400us}** |

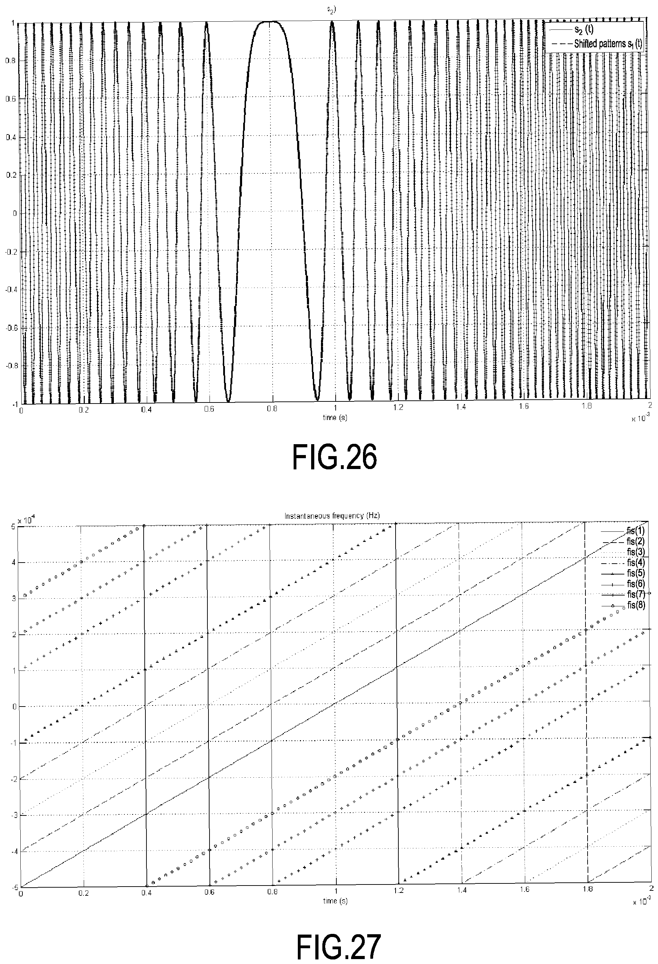

If, as represented in figure 26, we compare the second chirp signal $s_2(t)$ on the time shifted version of the first chirp signal $s_1(t)$ by an amount equal to the difference $\tau_2$ - $\tau_1$ between the inversion time of the second chirp signal and the inversion time of the first chirp signal, the two signals perfectly superimpose one another. The same result can be obtained for each combination of any of the chirp signals of the above set. Figure 27 represents this circularity in terms of variation of the instantaneous frequency of the chirp signals. Although each n-th chirp $s_n(t)$ of the set of chirp signals, $s_1(t), s_2(t), ..., s_8(t)$ encompasses a band of 100kHz, their starting instantaneous frequency is shifted circularly, i.e. the instantaneous frequency starts and ends - in correspondence of the symbol time T, at a same frequency value and, in the case of chirp-up, has a jump each time it reach the positive limit of the band to reach instantaneously the negative limit (or vice-versa, if the gradient of frequency was negative), and has an inversion time $\tau_n$ each time the instantaneous frequency cross the zero value. More in detail, when the instantaneous frequency jump occurs, a phase discontinuity of $\pm 2\pi Bt$ where B is the bandwidth of the chirp signal - in the example being 100kHz - takes place, and a secondary inversion time $\tau_{jump,n}$ at the moment of the jump itself can be further created. For the n-th chirp, $\tau_{jump,n}$ follows the rule

$$\tau_{jump,n} = \tau_n + T/2$$

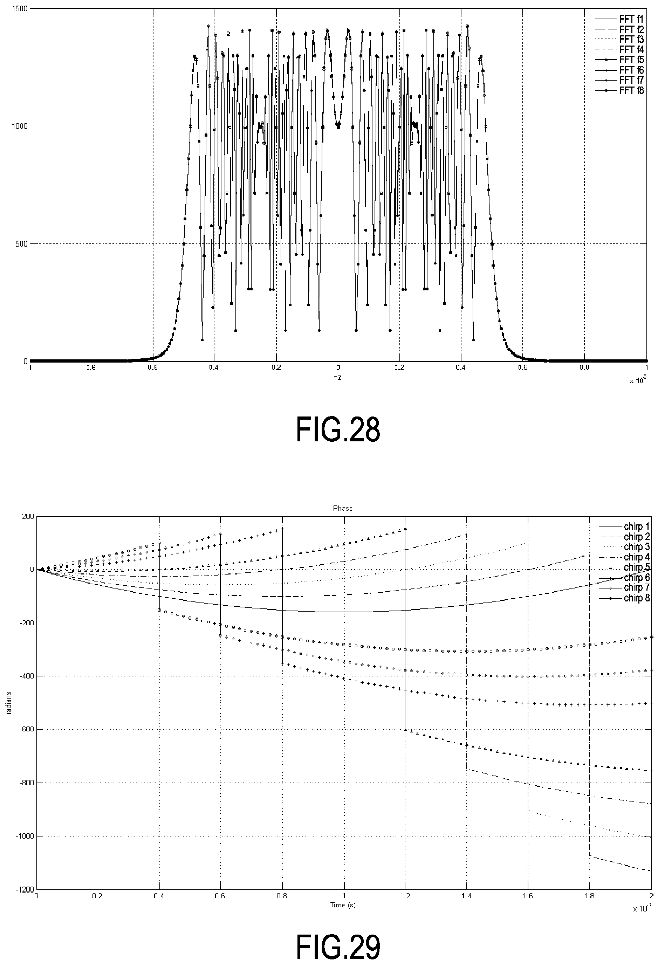

Figure 28 shows the fast Fourier transform plot of the above chirp signals, clearly having the same bandwidth occupation.

In this example, in order to match with the pattern in the correlator, the starting frequency for each of the chirps is subject to a further constraint: each n-th chirp shall have the same phase $\theta$ in correspondence of the inversion time. Thus, the starting frequencies are selected from a plurality of frequencies that follow the laws hereinafter expressed:

$$f_{0\_n(negative)} = -\sqrt{\frac{k_n}{\pi}(\theta \pm 2\pi m)}, \quad m\epsilon\aleph$$

$$f_{0\_n(positive)} = f_{0\_n(negative)} + B$$

The above equations can be deduced from the relation of the constraint:

$$2\pi f_0\tau_n + \pi k_n\tau_n^2 \equiv \theta \pm 2\pi m, \quad m\epsilon\aleph$$

and from the frequency circularity in the band B.

As well, the chosen starting frequency satisfies the relation:

$$f_0 = \frac{BT + \frac{B\,dt^2}{T} - B\,dt \pm 2n}{2T}$$

wherein *dt* is the time resolution of the mixer, which allows to maintain the same phase (i.e., a multiple of $2\pi$ of the phase) at the moment immediately before and the moment immediately after the instantaneous frequency of the chirp jumps. The results of the above rules in terms of phase of the complex envelope are represented in figure 29. The phasor, although jumping, performs a jump equal to a multiple of $2\pi$, furtherly, when the phase curve appears with zero slope, the phasor changes direction of rotation- in correspondence of the predetermined inversion time for each of the chirp signals.

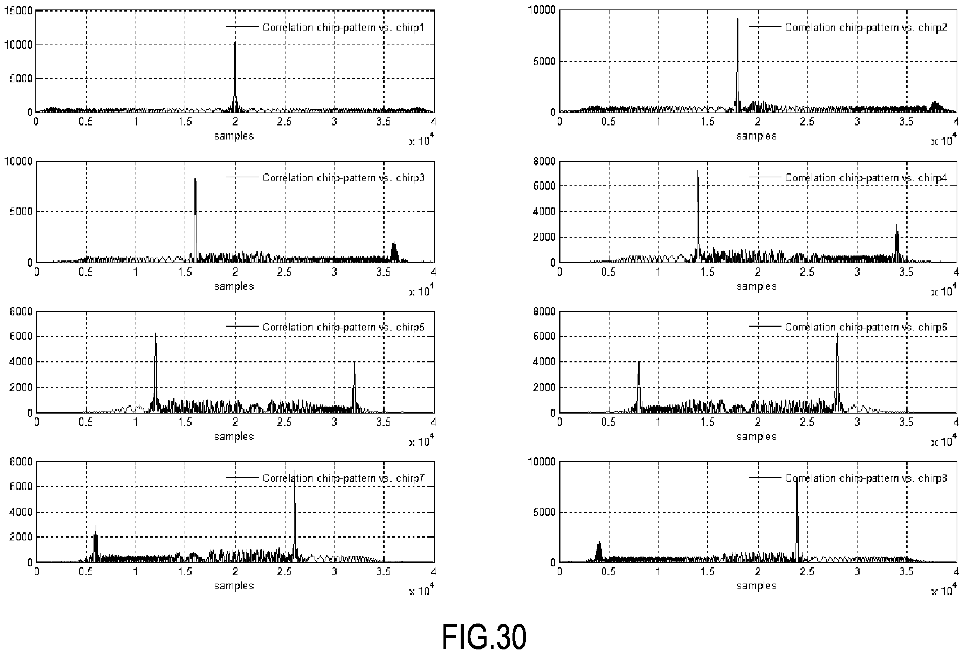

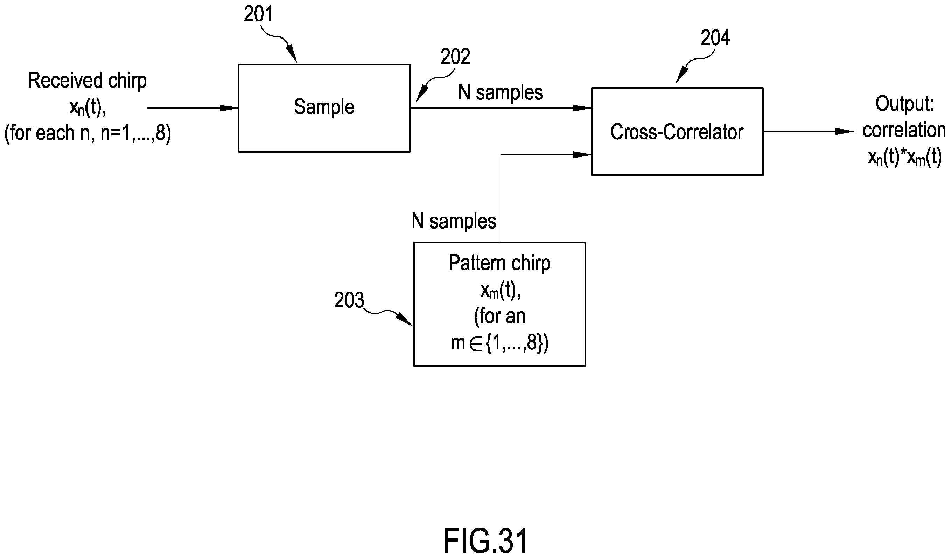

In particular, for obtaining the correlation diagrams of figure 18 (or of figure 30) for the chirp set of figure 16 (or of figure 25), a receiving device according to the block scheme of principle shown in figure 31 can be used. The received signal $X_n(t)$ based on the set of 8 chirps each one having its own inversion time, first is fed in input to a sampler stage 201 comprising an analog to digital converter. Such a sampler stage processes the received signal $x_n(t)$ so as to produce on its output 202 a set of N samples. The memory of the receiving device comprises the same set of chirps as the set received considered as a set of pattern chirps $x_m(t)$, schematically represented by block 301. The memory and the output 202 of the sample and hold stage 201 feed respective inputs of a cross-correlator stage 204 which performs the correlation $x_n(t) * x_m(t)$ for each combination of n and m and whose output produces the correlation diagrams depicted in the figures.

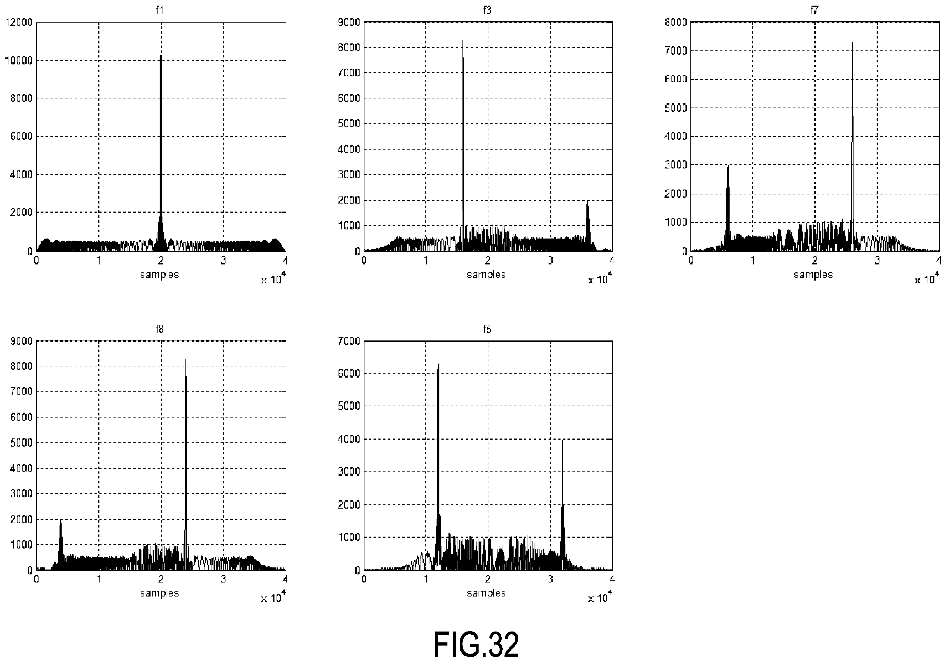

Figure 30 and partially figure 32, instead, show the correlation diagrams of the timefrequency shifted chirps $s_1(t), s_2(t), ..., s_8(t)$ of figure 25 with only one chirp of the same set, specifically, the generation chirp $s_1(t)$. Although some spikes can be present, for the set of chirps previously disclosed (caused from the frequency jump), the autocorrelation level is at least 1.5 times higher than the maximum cross correlation; in any case these spikes, if compared with the peak of the autocorrelation, are always spaced by twice a time T/2, corresponding to the symbol rate, as the correlator doubles the dimensions. Advantageously the correlator is still capable to discriminate each symbol configuration if it is assumed that the correlation is performed along the complete length of the chirp, in other word the output of the correlator must be recovered as a "snapshot" at the instant in which the correlator is filled by the incoming receiver signal in its exact length, otherwise the correlation would be wrongly carried out between the pattern chirp and only a portion of the received chirp or two portion of two adjacent chirp of a symbol sequence.

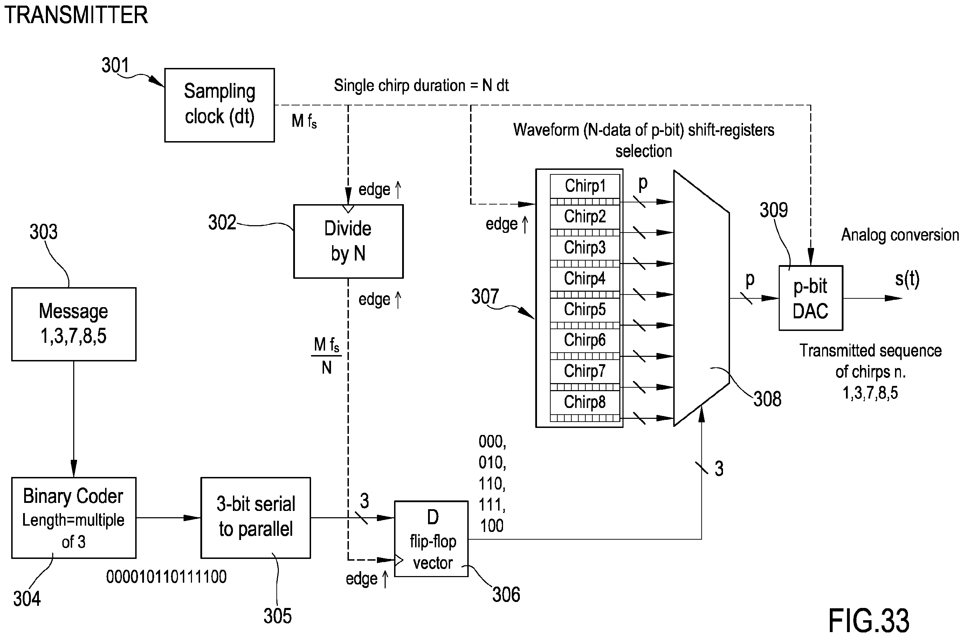

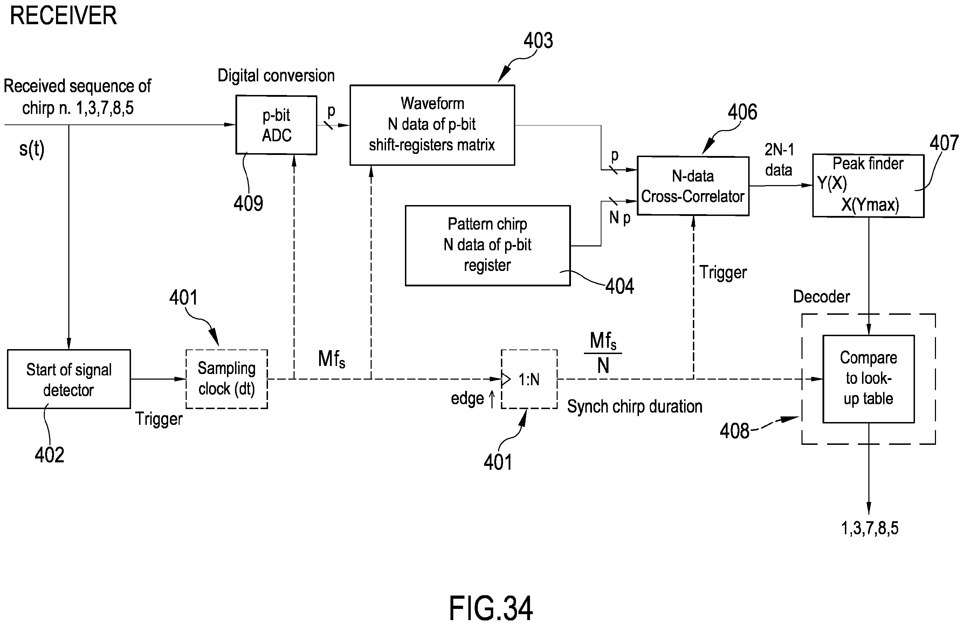

More in detail, the transmitter and receiver stages respectively for the transmitter and receiver side have a structure which is shown in figures 33 and 34. In those figures, the references \p or \3 refer to the number of lines which are involved in parallel. The transmitter generates five indexes of chirp signals among the set of 8, namely the chirp indexes 1, 3, 7, 8, 5 (block 303). Then, a binary coder 304 sequences the corresponding bits and a serial-to-parallel sequencer 305 parallelizes the stream of bits creating a sequence of sub-streams of bits, feeding by means of its outputs the data input of a flip-flop vector 306, preferably but in a non-limiting extent of a D type. Such a flip flop 306 has a trigger input, preferably but in a non-limiting extent of a positive edge type, which is fed by a reference signal generated by a reference sampling clock 301 through a divider 302, which receives in input the signal coming from the sampling clock 301 - preferably but in a form of a square wave - and divides it by an integer number N being equal to the number of samples composing a symbol at the said sampling clock. If the reference signal has a frequency corresponding to $M f_s$, the output of the divider 302 will have a frequency $M f_s / N$ equal to the symbol rate. $M$ is a fixed integer value. The transmitter further comprises a multiplexer 308, fed in input by eight sample signals 307 of chirp ($chirp_1, ... chirp_8$ in figure) and by the parallelized stream of bits that corresponds to the set of symbols to be transmitted, each symbol being associated to a respective chirp. The output of the multiplexer 308 feeds the input of a digital-to-analog converter 309 whose secondary frequency reference input is directly fed by the output of the sampling clock 301. The output of the digital-to-analog converter 309 produces the signal s(t) to be transmitted. Figure 33 discloses the following stream: 000010110111100. Being the system configured for transmitting chirps among a set of 8, the parallelization is made on three bits per time, that become one of the eight symbols. The result is that the above stream produces a sequence of five symbols: 000, 010, 110, 111, 100. Such a sequence corresponds to transmit the first, third, seventh, eighth, fifth among the eight chirps ($chirp_1, .... chirp_8$) in the predefined set. In the case of figure 33, given that each of the five symbols has three bits, \p=3.

At the receiving device 100 - as shown in figure 34 - the received sequence of chirps is at first subjected to an analog to digital conversion performed by an analog-to-digital converter 409 which receives a reference frequency coming from a reference sampling clock 401 triggered by a signal start detector 402 directly fed in input from the RF front-end of the receiver. As for the transmitter, the reference sampling clock 401 preferably generates a square wave with frequency $M f_s$. Such a reference signal is further fed in input to a shift-register matrix 403, receiving further in input also the digital conversion of the (analogue) received signal. The receiver further comprises a cross-correlator 406 fed on a first input thereof by the serial output of the shift-register matrix 403 and on a second parallel input thereof by the output of a pattern chirp data register 404. The trigger of the cross-correlator is governed by the reference signal divided by N in frequency, resulting in a symbol rate triggering signal, fed thereto by a divider 405 similar to that of the transmitter. The output of the correlator 406 is fed to a peak finding stage 407 which is conceived for searching among the samples fed thereto, at what time (or sample) the peak correlation value takes place. Such a result, from the output of the peak finding stage 407 is fed to a look up table 408 which provides for making the receiver correctly decode the transmitted sequence.

In accordance with the said second way of producing inversion time, is further realized an ultrasonic radar comprising a transducer of a known type configured to transmit an echo signal comprising one or more chirps, from here on named generator chirps, each one in a predetermined interval of time wherein each generator chirp can produce in the receiver a down-sampled coded chirp with an own inversion time bi-univocally associated with that symbol, when the downsampling is performed by the receiver at a pre-determined frequency comprises between the minimum and maximum frequency of that chirp (second way), and having the other features disclosed in the previous part of the description. The same transducer can be further capable of receiving the transmitted signal echoed by one or more obstacles; otherwise the ultrasonic radar will be equipped with at least another transducer, specifically conceived for only receiving the transmitted signal echoed by one or more obstacles.

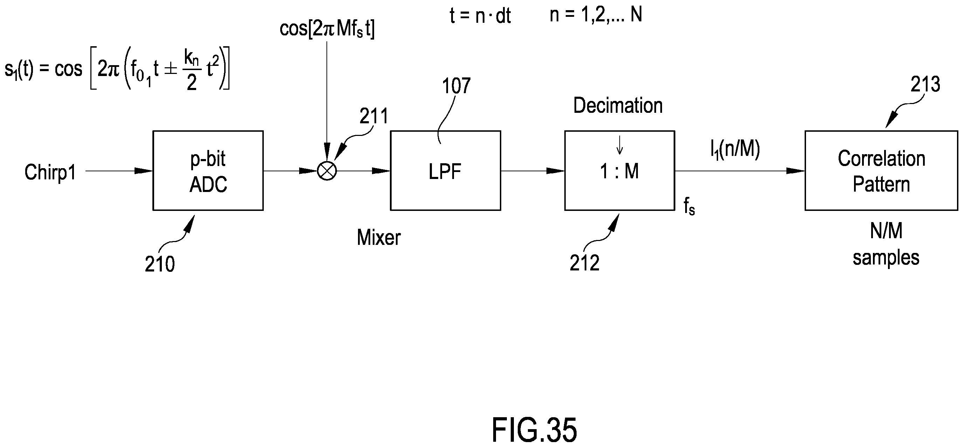

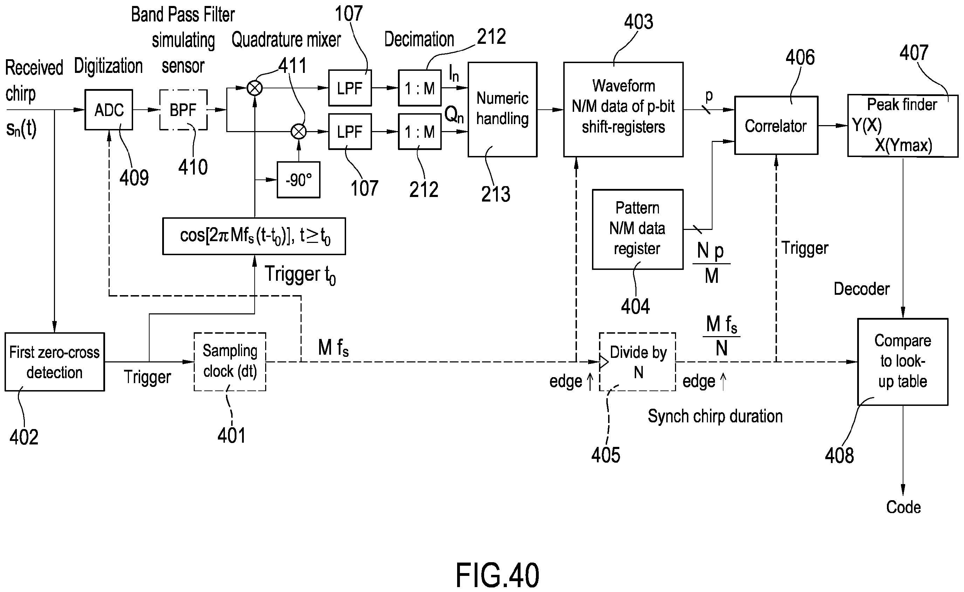

The ultrasonic radar refers to the principle disclosed in the first part by considering the ideal receiver stage 109 whose sampling frequency is intermediate between the extremes, minimum and maximum, of the instantaneous frequency band of the chirp signal. The principle structure of the ideal receiver is shown in figure 19, to whose description the reader is directed. Figure 35 discloses the equivalent ideal electric scheme which can explain a possible generation of the pre-determining signal $I_1$ to be used as the correlation pattern in the receiver stage of the radar. In this scheme a non-limiting embodiment is considered, which uses the in-phase down-sampled chirp amplitude as a signal form to feed correlator. This form is not to be considered mandatory for the embodiment as different types of signal forms could be used, without an alteration of the invention principle, for example it could be carried out a complex quadrature mixing and used any combination real or complex, linear or non-linear of the couple of the in-phase and in-quadrature signals to use as a signal form for the correlator inputs (block "Numeric handling" of the figure 40), taking care that the same signal form shall feed the correlator at the input of the incoming signal and at the input of the pattern signal. For correlator or cross-correlator shall be intended any device or digital computation able to perform a mathematical cross-correlation between a couple of signals of the same form or two couples of complex signals, one for the real part and one for the imaginary part. Regarding to the non-limiting choice of considered the in-phase real amplitude as the signal form to be correlated, in the Figure 35, a received generator signal is given in the form:

$$s_1(t) = \cos\left[2\pi\left(f_{0_1}t \pm \frac{k_n}{2}t^2\right)\right]$$

such a signal is first transmitted to the input of an analog-to-digital converter 210 that further feeds a first input of a mixer 211 fed on a second input with a sine signal at frequency $M f_s$. The product of those signals is the filtered by a low pass filter 107 and then decimated by a decimator stage 212 arranged in series to the output of the low pass filter 107. The signal coming from the decimator stage will be used as a correlator pattern 213 to be applied in the correlator of the receiver. This scheme of ideal receiver is shown for explaining that the correlation pattern, arbitrarily chosen to be determined from the generation chirp 1, is produced in the same way as the output of the receiver would produce the demodulated chirp 1 from processing the receiver generation chirp 1.

In a further non-limiting example, an Electronic Central Unit manages a communication between a transmitter and a receiver with a sequence of 5 bit per frame (with a range of value of 25 = 32 counts per frame), 3 bits of which (e,g,, the least significant bits) are associated to one of the preset set of 8 pre-symbols (chirps) selected on the transmitter, and the other 2 bits are associated to one of a preset set of four frequencies fc_a, fc_b, fc_c, fc_d to be applied in the mixer) of the receiver as a local oscillator frequency (or as sampling rate of a down-sampler) which permits to extract a symbol (an inversion time) among a set of 32 symbols (inversion times) due to the all combinations of 8 transmitted chirps with 4 mixer frequencies, produced after quadrature demodulation on the received pre-symbol (transmitted chirp). It is assumed that all the 32 inversion times are evidently predefined to be different from one another.

In this example, the complex phasor of the transmitted chirp during the frame interval does not necessarily produce a proper inversion time. Indeed, the codifying inversion time is produced by the complex phasor at the output of the receiver quadrature demodulator.

| | | LSB | | | | | | | |
|---|---|---|---|---|---|---|---|---|---|
| | | 000 | 001 | 010 | 011 | 100 | 101 | 110 | 111 |
| | MSB | | | | | | | | |
| for fc_a | 00 | chirp 1\ $T_1$a | chirp 2\ $T_2$a | chirp 3\ $T_3$a | chirp 4\ $T_4$a | chirp 5\ Tea | chirp 6\ Tea | chirp 7\ $T_7$a | chirp 8\ $T_8$a |
| for fc_b | 01 | chirp 1\ $T_1$b | chirp 2\ $T_2$b | chirp 3\ $T_3$b | chirp 4\ $T_4$b | chirp 5\ $T_5$b | chirp 6\ $T_6$b | chirp 7\ $T_7$b | chirp 8\ $T_8$a |
| for fc_c | 10 | chirp 1\ $T_1$c | chirp 2\ $T_2$c | chirp 3\ $T_3$c | chirp 4\ $T_4$c | chirp 5\ $T_5$c | chirp 6\ Tec | chirp 7\ $T_7$c | chirp 8\ $T_8$c |

(continued)

| | | LSB | | | | | | | |
|---|---|---|---|---|---|---|---|---|---|
| | | 000 | 001 | 010 | 011 | 100 | 101 | 110 | 111 |
| | MSB | | | | | | | | |
| for fc_d | 11 | chirp 1\ $T_1$d | chirp 2\ $T_2$d | chirp 3\ $T_3$d | chirp 4\ $T_4$d | chirp 5\ Ted | chirp 6\ Ted | chirp 7\ $T_7$d | chirp 8\ Ted |

Consider now an example case in which the concept of inversion time recovered inside the receiver is applied : In a data communication application between a broadcast transmitter and many receiving nodes, the data are encoded by transmitting a sequence of two alternating frames, the first frame containing a pause of null transmission whose duration is pre-established to command to the receiver the use of a predetermined mixer frequency from a set of, e.g., 4 frequencies, coding for 2 bits, and the side left\right to juxtapose the 2 bits relatively to the bits encoded by the adjacent second frame; the second frame is a chirp each associable to a pre-symbol, e.g., coding for 3 bits (achievable with a set of 8 chirps). So that, for example, the broadcast transmitter send the sequence: NULL(representing 00\right), chirp(representing 110), NULL(representing 10\left), chirp(representing 011). The resultant code is 11000,10011.

The principal parameters of the preferred embodiment of the ultrasonic radar are disclosed in the following table. For simplicity of exposure, only chirps with incremented gradient of frequency will be shown. Actually, an analogue generation of frequency decreasing chirp should be considered, by mirroring the instantaneous frequency curves. It shall be considered that when using both increasing and decreasing frequency chirps, the receiver shall double the correlator block feeding each correlator by the same incoming signal but one correlator shall be fed by the pattern generated from an increased frequency and the other one shall be fed by a pattern generated by a decreasing frequency. Each of the two correlator is able to discriminate exclusively a gradient type, increasing "k" or decreasing "-k", being the opposite gradient very uncorrelated. In this case, the number of symbols would be double, so that the number of bit to be coded increases by one.

| Table 6 | | |
|---|---|---|
| QUANTITY NAME | SYMBOLS AND EQUATIONS | QUANTITY VALUE |
| Number of Symbols | N | 20 |
| Instantaneous Frequency band | B | 50 kHz |
| Chirp Duration | T | 1000 us |
| Time-resolution of chirp | $dt$ | 2,4038 us |
| Frequency rate | $$k_n = k = \frac{B}{T} \text{ for all } n = 1, \dots, N.$$ | 50000000 Hz/s |
| Receiver Mixer: Local oscillator frequency | $f_s$ | 416 kHz |
| Sample & Hold frequency at the Mixer output | $F_c$ | 52000 Hz |
| Instantaneous frequency base-equation (without circularity) | $$f_{i_n} = f_{v0_n} + kt$$ | |
| Instantaneous frequency at the mixer output | $$f_{i_n} = f_{v0n} - F_c + kt$$ | |

(continued)

| Table 6 | | |
|---|---|---|
| **QUANTITY NAME** | **SYMBOLS AND EQUATIONS** | **QUANTITY VALUE** |
| **Virtual Starting frequency** <br><br> **(without circularity)** | $$f_{v0_n} = F_c + B - \sqrt{\frac{k}{\pi}(\theta + 2\pi n)},$$ <br><br> $n = 1 \div N, \theta = 0{,}9$ <br><br><br> $f_{v0_n} > 0$ | **Values in Hz** <br> 91307,76    68618,5 <br> 87360,19    67152,8 <br> 84270,82    65746,3 <br> 81645,05    64392, <br> 79321,29    63085,6 <br> 77214,44    61821,3 <br> 75273,16    60595, <br> 73463,64    59405,1 <br> 71762,21    58247,0 <br> 70151,55    57118,7 |
| **Effective starting frequency** | **Setting for frequency circularity between** $F_c - \dfrac{B}{2}$ **and** $F_c + \dfrac{B}{2}$: <br><br> $$f_{0_n} = f_{v0_n}, \quad \text{for } F_c + \frac{B}{2} > f_{v0_n} > F_c - \frac{B}{2}$$ <br> $$f_{0_n} = f_{v0_n} - B, \quad \text{for } F_c + \frac{3B}{2} \geq f_{v0_n} > F_c + \frac{B}{2}$$ <br> $$f_{0_n} = f_{v0_n} + B, \text{for } F_c - \frac{B}{2} > f_{v0_n} \geq F_c - \frac{3B}{2}$$ <br> $$f_{0_n} = f_{v0_n} - 2B, \quad \text{for } F_c + \frac{5B}{2} \geq f_{v0_n} > F_c + \frac{3B}{2}$$ <br> $$f_{0_n} = f_{v0_n} + 2B, \quad \text{for } F_c - \frac{3B}{2} \geq f_{v0_n} \geq F_c - \frac{5B}{2}$$ | **Values in Hz** <br><br> 41307,76    68618,51 <br> 37360,19    67152,85 <br> 34270,82    65746,39 <br> 31645,05    64392,5 <br> 29321,29    63085,68 <br> 27214,44    61821,35 <br> 75273,16    60595,6 <br> 73463,64    59405,12 <br> 71762,21    58247,01 <br> 70151,55    57118,78 |
| **Inversion-times** | $$\tau_n = -\frac{(f_{0_n} - F_c)}{k_n} \quad \text{for } f_{0_n} < F_c,$$ | **Values in $\mu$s** <br> 214    668 <br> 293    697 <br> 355    725 |

(continued)

| Table 6 | | |
|---|---|---|
| **QUANTITY NAME** | **SYMBOLS AND EQUATIONS** | **QUANTITY VALUE** |
| | $$\tau_n = -\frac{(f_{0_n} - F_c - B)}{k_n} \quad \text{for } f_{0_n} > F_c,$$ | 407    752<br>454    778<br>496    804<br>535    828<br>571    852<br>605    875<br>637    898 |
| **Chirp equations** | $$\sin\left[2\pi\left(f_{0_n}t + \frac{k_n}{2}t^2\right)\right], for\ t\ when\ \left|f_{i_n}(t)\right.$$ $$\left. - F_c\right| < \frac{B}{2},$$ *else:* $$\sin\left[2\pi\left(f_{0_n}t + \frac{k_n}{2}t^2 \pm nBt\right)\right],$$ *where $\pm n$ = as for the rule: $f_{0_n} = f_{v0_n} + nB$ above reported* | |
| **Frequency jumps occurrences** | $$t_{jump_n} = \tau_n + \frac{T}{2},$$ *for positive frequencies* $$t_{jump_n} = \tau_n - \frac{T}{2},$$ *for negative frequencies* | **Values in μs**<br><br>714    168<br>793    197<br>855    225<br>907    252<br>954    278<br>996    304<br>35     328<br>71     352<br>105    375<br>137    398 |
| **Transceiver model** | **FIR Band-Passfilter 52kHz +/-2500Hz** | |

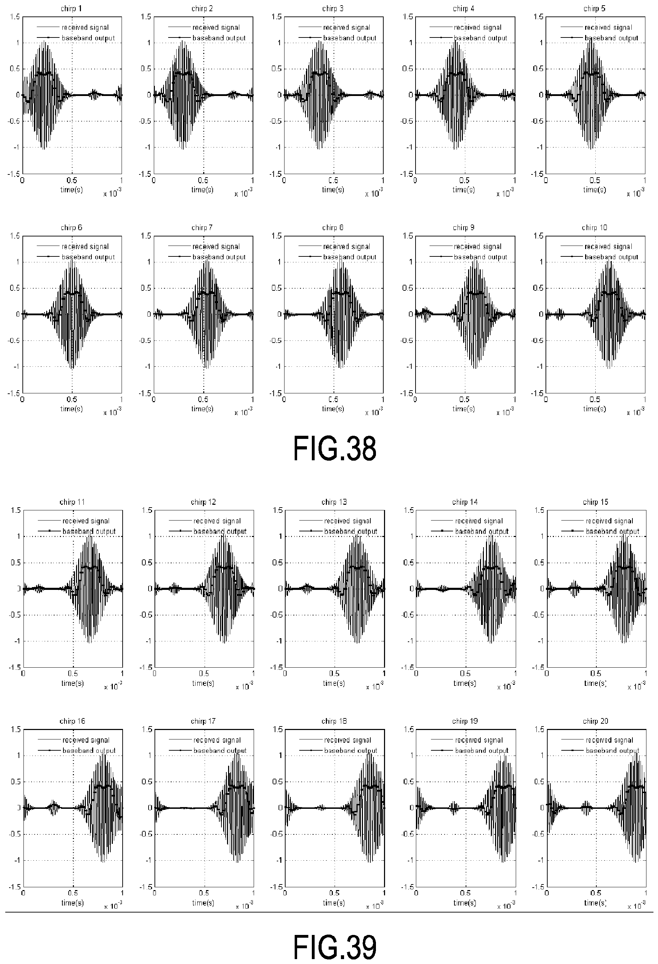

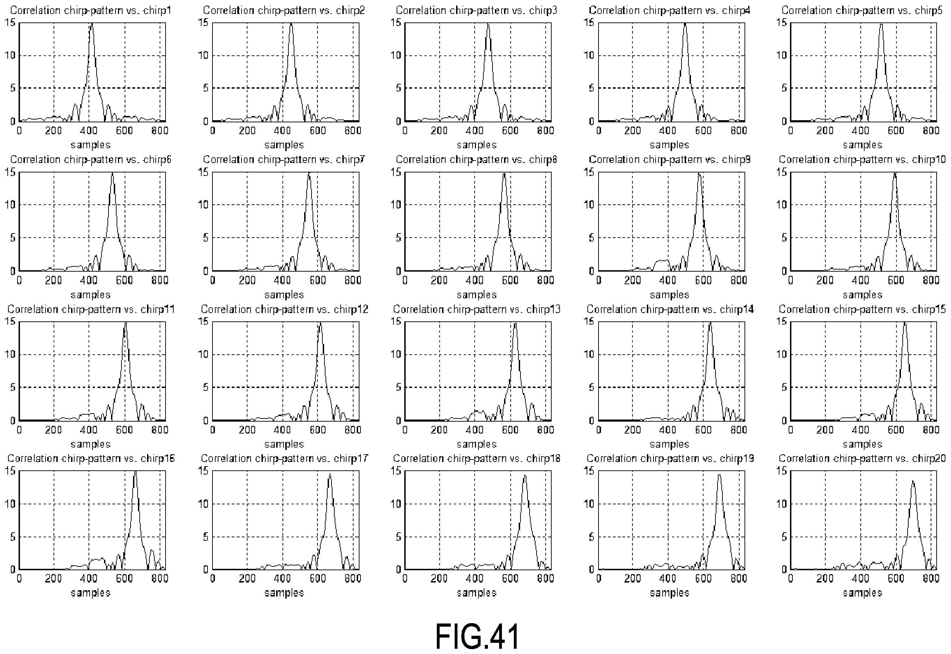

Figures 36 and 37 respectively show the graph of the instantaneous frequency of the set of 20 generation chirps according to the previous table (only the increasing frequency chirps) in a simulation environment and - respectively - the graph of the instantaneous frequency of the demodulated chirps, i.e. the frequency of the beat signals at the output of the Low Pass Filtering 107 and the quadrature mixer 109. Figures 38 and 39 show the received chirps, at the output of the transducer (block 410 of figure 40) together with the downsampled signal at the output of the mixer and low-passing filtering stage (block 212 of the figure 40), here named "baseband output". Figure 40 shows the correspondent receiver scheme. In this non-limiting embodiment, the numeric handling 213 is limited to a straight pass the only in-phase signal amplitude, so that the output of 213 is equal to"$I_n$". Figure 41 shows the results of the correlator for each downsampled chirp when the pattern is chosen to be the in-phase amplitude "$I_1$"of the down-sampled chirp 1, produced from the generator chirp $s_1(t)$ by the scheme in figure 35.

The functions of time representing the instantaneous frequencies in association to the frequency of the local oscillator of the receiver mixer, are chosen, as well as to achieve a plurality of chirps shifted in time and frequency, as described before, so as to increase the number of symbols.

Since the symbols are defined as times and Since the time resolution of the ultrasonic radar can be determined with the inverse of the chirp bandwidth B, the maximum number of symbols that can be transmitted is given by the product of the bandwidth of the chirp by the time duration of the chirp itself.

The Applicant has considered that for increasing the number of symbols transmittable with the radar, the bandwidth of the chirps has been advantageously selected to be wider than the bandwidth of the transducer, that behaves as a band pass filter. Conversely, the transducer will filter and damp the extremes (lowest and highest) of the chirp bandwidth, producing a reduction of the length of the appreciable signal, as visible in figures 38 and 39, to be compared to the pattern in the correlator. Providing also a receiver sampling frequency equal to the resonance frequency of the transducer, the appreciable part of demodulated signal is always time centered on the inversion time, as it occurs when the instantaneous frequency of the received generator chirp equals the receiver sampling frequency (equal to the resonance frequency of the transducer). This condition guarantees the presence of the peak at the output of the correlator.

In an ultrasonic radar detector, the Doppler effect provided to the signal echoed by a moving obstacle shall be kept into account. In particular, the Applicant has found that the shifting in frequency provided by the Doppler effect modifies the shape of the received signal at the output of the mixer 109 and/or modifies the time shifting of the peak of the correlation.

The Applicant, according to an optional but preferred embodiment, has conceived the ultrasonic radar to transmit the chirp signal with a fixed frequency burst appended before the starting of the chirp signal, which frequency can have a non-limiting value equal to the nominal sampling frequency of the receiver demodulator. Advantageously such a frequency burst provided, once received after being echoed by a moving object at least a rough and temporary estimation of the flat Doppler shift the signal has, and gives the receiver device the possibility of detect the frequency displacement with respect to the nominal sampling frequency in order to apply the received shifted frequency as the new sampling frequency of the demodulator, so that to reduce the risk that the correlation analysis of the pattern can fail.

The structure of the radar receiver is further depicted in figure 40, wherein the Band Pass Filter 410 is added respective to the real receiver stage in order to simulate the frequency selective behavior of the transducer (or, in general the antenna). The receiver thereof is quite similar to the structure of the receiver shown in figure 34.

In particular, in the radar receiver the received sequence of chirps is at first subjected to an analog to digital conversion performed by an analog-to-digital converter 409 which receives a reference frequency coming from a reference sampling clock 401 triggered by a signal start detector 402 directly fed in input from the RF front-end of the receiver. As for the transmitter, the reference sampling clock 401 preferably generates a square wave with frequency $M f_s$. Such a reference signal is further fed in input to a shift-register matrix 403, receiving further in input also the digital conversion of the (analogue) received signal, that is subjected to a signal processing which comprises now, for simulation reasons, a filtering by means of a band pass filter 410, simulating the frequency behavior of the transducer, that feeds the input of a mixer 411 with a sine wave at frequency $M f_s$, by means of a cosine generator triggered by said signal start detector 402, that in detail is a first zero cross detection system; the output of said mixer is further low-pass filtered and then decimated by a decimator 212 arranged in series to the low pass filter. The receiver further comprises a cross-correlator 406 fed on a first input thereof by the output of the shift-register matrix 403 and on a second input thereof by the output of a pattern chirp data register 404, in particular being an N/M data register. The sampling of the cross-correlator is governed by the reference signal divided by N in frequency, fed thereto by a divider 405 similar to that of the transmitter, that divides the sampling frequency by an amount N, equal to the number of samples per chirp at a sampling rate of $M f_s$. The output of the correlator 406 is fed to a peak finding stage 407 which is conceived for searching among the samples fed thereto, at what time (or sample) the peak correlation value takes place. Such a result, from the output of the peak finding stage 407 is fed to a look up table 408 which provides for making the receiver correctly decode the transmitted sequence.

The transmitter and receiver can be realized in any known way, in particular either with hardware or software defined parts or stages. These parts or stages can be made operate by means of a data processing unit, preferably but in a non-limiting extent capable of operating with floating point data, performing the method steps required to create and process either the chirp signal to transmit and being received, as well as to create and store the data stream and symbols that might be defined according to specific embodiments of the invention. Accordingly, the data processing unit can be - without limiting extent - a general purpose processor specifically programmed therefor, or a processor specifically produced to perform only the operations required by the present invention. As well, the general purpose processor can be part of a personal computer or network of personal computers, also being remotely arranged one with respect to the other. The data processing unit can operate via a complex or reduced set of instructions and can be associated with any type of data storage support suitable to realize a memory to at least temporarily store the data the present invention requires, namely the data stream to be transmitted, the symbols associated to the laws of instantaneous frequency variation for the chirp signals, the above laws themselves and eventually the decoded data stream.

In the last not-limiting example embodiment of the present invention, only one mixer frequency is implemented, so that, in the example, 20 symbols are defined by time-shifting the chirp in transmission, but it is clear that, if using, e.g., 10 different mixer frequencies, the number of symbols becomes 20*10=200.

It is finally clear that some adaptations, additions or modifications obvious for a person skilled in the art can be brought to the invention as disclosed above, without for this departing from the scope of protection provided by the annexed claims.

**Claims**

1. A method of decoding a data stream from a received signal, the method comprising:

   determining that the received signal comprises a sequence of one or more chirp signals having a profile of instantaneous frequency ($f_i(t)$) variation over time, wherein the chirp signals are generated at a transmitter by circularly time-shifting a single generator chirp signal and the instantaneous frequency ($f_i(t)$) of a chirp signal is zero at a unique inversion time ($\tau_n$), and, for each chirp signal:
   determining the inversion time of the chirp signal in a synchronized single discriminator stage by comparing by-the-fly the chirp signal in a single correlator with a unique fixed pattern symbol and detecting a correlation peak position, that is univocally
   related to the time-shift and to the inversion time ($\tau_n$), and
   determining that the inversion time ($\tau_n$) uniquely corresponds to a respective symbol, which represents a sequence of one or more bits; and
   decoding the received signal by reconstructing the data stream from the sequence of one or more bits corresponding to the respective symbol corresponding to each chirp signal, and
   wherein the inversion times ($\tau_n$) of the chirp signals represent the data stream.

2. A method according to claim 1, wherein a phasor of a complex envelope of the chirp signal rotates over time at a rate determined by the profile of instantaneous frequency ($f_i(t)$) variation and changes direction of rotation at the inversion time.

3. A method according to claim 2, wherein the said instantaneous frequency ($f_i(t)$) is the derivative of the cumulated angle of the phasor over the time.

4. A method according to any preceding claim, further comprising:

   detecting a Doppler shift estimation compensation preamble appended to the one or more chirp signals, wherein the Doppler shift estimation compensation preamble is a fixed frequency burst signal;
   estimating a frequency shift of the received signal resulting from Doppler shift based on the detected Doppler shift estimation compensation preamble; and
   applying the received shifted frequency as a new sampling frequency of a demodulator.

5. A signal decoding apparatus for decoding a data stream from a received signal, the apparatus comprises:

   a receiver stage (101) having an input suitable for receiving signals;
   a signal analysis stage (104) configured to:

   determine that the received signal comprises a sequence of one or more chirp signals having a profile of instantaneous frequency ($f_i(t)$) variation over time, wherein the chirp signals are generated at a transmitter by circularly time-shifting a single generator chirp signal and the instantaneous frequency ($f_i(t)$) of a chirp signal is zero at a unique inversion time ($\tau_n$), and, for each chirp signal:

   determine the inversion time ($\tau_n$) of the chirp signal in a synchronized single discriminator stage by comparing by-the-fly the chirp signal in a single correlator with a unique fixed pattern symbol and detecting a correlation peak position, that is univocally related to the time-shift and to the inversion time ($\tau_n$), and
   determine that the inversion time ($\tau_n$) uniquely corresponds to a respective symbol, which represents a sequence of one or more bits; and
   a data stream generating means configured to reconstruct the data stream from the sequence of one or more bits corresponding to the respective symbol corresponding to each chirp signal.

**Patentansprüche**

1. Verfahren zum Dekodieren eines Datenstroms aus einem empfangenen Signal, wobei das Verfahren aufweist:
   Bestimmen, dass das empfangene Signal eine Sequenz von einem oder mehreren Chirpsignalen mit einem Profil der Variation der Momentanfrequenz ($f_i(t)$) im Zeitverlauf aufweist, wobei die Chirpsignale an einem Sender durch zirkulares Zeitverschieben eines einzelnen Generatorchirpsignals generiert werden und die Momentanfrequenz ($f_i(t)$) eines Chirpsignals bei einer eindeutigen Inversionszeit ($\tau_n$) Null ist, und für jedes Chirpsignal:

Bestimmen der Inversionszeit des Chirpsignals in einer synchronisierten einzelnen Diskriminatorstufe, indem das Chirpsignal in einem einzelnen Korrelator ohne Vorbereitung mit einem eindeutigen fixierten Mustersymbol verglichen wird, und
Detektieren einer Korrelationspeakposition, die univokal mit der Zeitverschiebung und der Inversionszeit ($\tau_n$) zusammenhängt, und
Bestimmen, dass die Inversionszeit ($\tau_n$) in eindeutiger Weise einem jeweiligen Symbol entspricht, das eine Sequenz von einem oder mehreren Bits repräsentiert; und
Dekodieren des empfangenen Signals durch Rekonstruieren des Datenstroms aus der Sequenz von einem oder mehreren Bits entsprechend dem jeweiligen Symbol entsprechend jedem Chirpsignal, und
wobei die Inversionszeiten ($\tau_n$) der Chirpsignale den Datenstrom repräsentieren.

2. Verfahren nach Anspruch 1, wobei ein Phasor einer komplexen Hüllkurve des Chirpsignals im Zeitverlauf mit einer Rate rotiert, die durch das Profil der Variation der Momentanfrequenz ($f_i(t)$) bestimmt wird, und die Rotationsrichtung an der Inversionszeit ändert.

3. Verfahren nach Anspruch 2, wobei die Momentanfrequenz ($f_i(t)$) die Ableitung des kumulierten Winkels des Phasors nach der Zeit ist.

4. Verfahren nach einem der vorhergehenden Ansprüche, des Weiteren aufweisend:

Detektieren einer Präambel der Doppler-Verschiebungsschätzungskompensation, die an das eine oder die mehreren Chirpsignale angehängt wird, wobei die Präambel der Doppler-Verschiebungsschätzungskompensation ein Burst-Signal mit fester Frequenz ist;
Schätzen einer Frequenzverschiebung des empfangenen Signals, die aus der Doppler-Verschiebung resultiert, basierend auf der detektierten Präambel der Doppler-Verschiebungsschätzungskompensation; und
Anwenden der empfangenen verschobenen Frequenz als neue Abtastfrequenz eines Demodulators.

5. Signaldekodiervorrichtung zum Dekodieren eines Datenstroms aus einem empfangenen Signal, wobei die Vorrichtung aufweist:

eine Empfängerstufe (101) mit einem Eingang, der zum Empfangen von Signalen geeignet ist;
eine Signalanalysestufe (104), die konfiguriert ist zum:
Bestimmen, dass das empfangene Signal eine Sequenz von einem oder mehreren Chirpsignalen mit einem Profil der Variation der Momentanfrequenz ($f_i(t)$) im Zeitverlauf aufweist, wobei die Chirpsignale an einem Sender durch zirkulares Zeitverschieben eines einzelnen Generatorchirpsignals generiert werden und die Momentanfrequenz ($f_i(t)$) eines Chirpsignals bei einer eindeutigen Inversionszeit ($\tau_n$) Null ist, und für jedes Chirpsignal:

Bestimmen der Inversionszeit ($\tau_n$) des Chirpsignals in einer synchronisierten einzelnen Diskriminatorstufe, indem ohne Vorbereitung das Chirpsignal in einem einzelnen Korrelator mit einem eindeutigen festen Mustersymbol verglichen wird und eine Korrelationspeakposition detektiert wird, die univokal mit der Zeitverschiebung und der Inversionszeit ($\tau_n$) zusammenhängt, und
Bestimmen, dass die Inversionszeit ($\tau_n$) in eindeutiger Weise einem jeweiligen Symbol entspricht, das eine Sequenz von einem oder mehreren Bits repräsentiert; und
ein Datenstromgenerierungsmittel, das zum Rekonstruieren des Datenstroms aus der Sequenz von einem oder mehreren Bits entsprechend dem jeweiligen Symbol entsprechend jedem Chirpsignal konfiguriert ist.

## Revendications

1. Procédé de décodage d'un flux de données à partir d'un signal reçu, le procédé comprenant les étapes suivantes : déterminer que le signal reçu comprend une séquence d'un ou plusieurs signaux à modulation de fréquence ayant un profil de variation de fréquence instantanée ($f_i(t)$) au cours du temps, les signaux à modulation de fréquence étant générés au niveau d'un émetteur par décalage temporel circulaire d'un signal à modulation de fréquence généré par un seul générateur et la fréquence instantanée ($f_i(t)$) d'un signal à modulation de fréquence étant nulle à un temps d'inversion unique ($\tau_n$) et, pour chaque signal à modulation de fréquence :

déterminer le temps d'inversion du signal à modulation de fréquence dans un étage de discrimination unique synchronisé en comparant à la volée le signal à modulation de fréquence dans un corrélateur unique avec un symbole de motif fixe unique et en détectant une position de pic de corrélation, qui est liée de manière univoque au décalage temporel et au temps d'inversion ($\tau_n$), et

déterminer que le temps d'inversion ($\tau_n$) correspond de manière unique à un symbole respectif, qui représente une séquence d'un ou de plusieurs bits ; et

décoder le signal reçu en reconstruisant le flux de données à partir de la séquence d'un ou plusieurs bits correspondant au symbole respectif correspondant à chaque signal à modulation de fréquence, et

les temps d'inversion ($\tau_n$) des signaux à modulation de fréquence représentant le flux de données.

2. Procédé selon la revendication 1, dans lequel un phaseur d'une enveloppe complexe du signal à modulation de fréquence tourne au cours du temps à une vitesse déterminée par le profil de variation de la fréquence instantanée ($f_i(t)$) et change de sens de rotation au moment de l'inversion.

3. Procédé selon la revendication 2, dans lequel ladite fréquence instantanée ($f_i(t)$) est la dérivée de l'angle cumulé du phaseur au cours du temps.

4. Procédé selon l'une quelconque des revendications précédentes, comprenant en outre les étapes suivantes :

détecter un préambule de compensation d'estimation de décalage Doppler annexé aux un ou plusieurs signaux à modulation de fréquence, le préambule de compensation d'estimation de décalage Doppler étant un signal de rafale à fréquence fixe ;

estimer un décalage de fréquence du signal reçu résultant du décalage Doppler sur la base du préambule de compensation d'estimation de décalage Doppler détecté ; et

appliquer la fréquence décalée reçue comme nouvelle fréquence d'échantillonnage d'un démodulateur.

5. Appareil de décodage de signaux pour décoder un flux de données à partir d'un signal reçu, l'appareil comprenant :

un étage de réception (101) ayant une entrée apte à recevoir des signaux ;

un étage d'analyse du signal (104) configuré pour :

déterminer que le signal reçu comprend une séquence d'un ou plusieurs signaux à modulation de fréquence ayant un profil de variation de fréquence instantanée ($f_i(t)$) au cours du temps, les signaux à modulation de fréquence étant générés au niveau d'un émetteur par décalage temporel circulaire d'un signal à modulation de fréquence unique et la fréquence instantanée ($f_i(t)$) d'un signal à modulation de fréquence étant nulle à un temps d'inversion unique ($\tau_n$) et, pour chaque signal à modulation de fréquence :

déterminer le temps d'inversion ($\tau_n$) du signal à modulation de fréquence dans un étage de discrimination unique synchronisé en comparant à la volée le signal à modulation de fréquence dans un corrélateur unique avec un symbole de motif fixe unique et en détectant une position de pic de corrélation, qui est liée de manière univoque au décalage temporel et au temps d'inversion ($\tau_n$), et

déterminer que le temps d'inversion ($\tau_n$) correspond de manière unique à un symbole respectif, qui représente une séquence d'un ou plusieurs bits ; et

un moyen de génération de flux de données configuré pour reconstruire le flux de données à partir de la séquence d'un ou plusieurs bits correspondant au symbole respectif correspondant à chaque signal à modulation de fréquence.

EP 3 438 693 B1

Received
chirp x(t) → | Sampler (sampling rate Fs) | I(t) → | Quadrature reconstruction | Q(t) → | Phasor analysis | → Inversion time $\tau$

101    106    108    102    103    104    105    100

**FIG.1**

Received
segnal with
chirp x(t)
Modulating in
quadrature
a carrier wave → | Quadrature Mixer (sampling rate=Fs=Fc) | → | Low Pass Filter | I(t) → | Phasor analysis | → Inversion time $\tau$
                                                        → | Low Pass Filter | Q(t) →

101    109    107    104    107    105

**FIG.2**

## FIG.3

## FIG.4

quadrature signals

FIG.5

Cumulated variation of phasor

FIG.6

Instantaneous frequency

FIG.7

FIG.8

FIG.9

quadrature signals

FIG.10

Cumulated variation of phasor

FIG.11

Instantaneous frequency

FIG.12

phasor trajectory

## FIG.13

abs(FFT(signal)) @ tau = 0.0004 s

## FIG.14

FIG.15

FIG.16

FIG.17

EP 3 438 693 B1

FIG.18

**FIG.19**

$$\cos[2\pi\, m\, f_s\, t]$$

Received chirp

$$s_n(t) = \cos\left[2\pi\left(f_{0_n}t \pm \frac{k_n}{2}t^2\right)\right]$$

Phase of chirp

$$\varphi_n(t) = 2\pi\left(f_{0_n}t \pm \frac{k_n}{2}t^2\right)$$

Quadrature mixer

Decimation

$$\vartheta_n = \tan^{-1}\left(\frac{Q_n}{I_n}\right)$$

Phase of complex envelope $I_n + j\vartheta_n$
(phasor phase)

$$\vartheta_n(t) = 2\pi\left[\left(f_{0_n} - f_s\right)t \pm \frac{k_n}{2}t^2\right]$$

$$\frac{1}{2\pi}\frac{d}{dt}$$

$$f_{ist_n}(t)$$

Phasor istantaneous frequency

$$f_{ist_n}(t) = \frac{1}{2\pi}\frac{d\vartheta_n(t)}{dt} = f_{0_n} - f_s \pm k_n t$$

---

$$\hat{f}_{ist}(t) = f_0 + k \cdot t$$

$$f_{ist}(t) = f_0 - f_s + k \cdot t$$

$$k = \frac{B}{T} = -\frac{(f_0 - f_s)}{\tau}$$

$$-(f_0 - f_s)$$

**FIG.20**

EP 3 438 693 B1

FIG.21

samples

FIG.22

EP 3 438 693 B1

FIG.23

Phasor trajectory after LPF

FIG.24

EP 3 438 693 B1

FIG.25

EP 3 438 693 B1

FIG.26

FIG.27

FIG.28

FIG.29

FIG.30

FIG.31

EP 3 438 693 B1

FIG.32

# TRANSMITTER

FIG.33

RECEIVER

FIG.34

EP 3 438 693 B1

$$s_I(t) = \cos\left[2\pi\left(f_{0_1}t \pm \frac{k_n}{2}t^2\right)\right]$$

$$\cos[2\pi Mf_s t]$$

$$t = n\cdot dt \qquad n = 1,2,\ldots N$$

FIG.35

EP 3 438 693 B1

FIG.36

FIG.37

FIG.38

FIG.39

FIG.40

FIG.41

EP 3 438 693 B1

INSTANTANEOUS frequency

Instantaneous frequency is defined as the derivative of the phase divided by $2\pi$. The chirp is a sinusoidal function which argument is the phase. We can describe a chirp by using a diagram of an instantaneous frequency as a function of time which starts from a "starting" frequency and stops with a "stopping" frequency (like here).

$f_{stopping}$

TRANSMITTED CHIRP: instantaneous frequency as function of time

$f_{starting}$

$f_{stoppi\ng}$

0

time

crossing of zero frequency

$f_{starting}$

when the line crosses the zero instantaneous frequency and we consider the chirp and its quadrature replica (phase displaced by 90°), an inversion of rotation is produced

**Figure 42**

INSTANTANEOUS frequency

Two symbols (black and blue lines) has the same duration T and the same frequency occupation ($f_{stopping}$ - $f_{starting}$) of a basic chirp (red line) and differ for the time-shift (t1 and t2) which can be identified, for example, at the passage to the starting frequency of the basic chirp. The differential code is based on the quantity (t2-t1) of two successive symbols.

T

$f_{stopping}$

$f_{starting}$

$t_1$

$t_2$

0 ?

time

**Figure 43**

INSTANTANEOUS frequency

A symbol is ideally obtained from the basic chirp, by "cutting" the basic chirp in a certain point $(f_{cut}, t_{cut})$ and shifting the two parts, such as the starting frequency of the symbol is $f_{cut}$ and the starting frequency of the basic chirp is reproduced in t1. This method can be named as a "cyclical modulo shifting" or "time-frequency cyclical shift"

T

$f_{stopping}$

$f_{cut}$

$f_{starting}$

$t_1$

$t_{cut}$

time

0 ?

**Figure 44**

INSTANTANEOUS frequency

If the symbols crosses the zero instantaneous frequency axis, inversion times occur. The absolute values of these inversion times (e.g., $\tau_1$ and $\tau_2$) **are not the same things** as the time-shifts ($t_1$ and $t_2$).

Indeed, in the cyclic time-shifted method, the difference $(\tau_2 - \tau_1)$ is **equal** to $(t_2 - t_1)$ because the intersection of symbols with the zero frequency axis is shifted by the time-shift itself. But, please, look at the other draft below.

time

0

T

$t_1$

$t_2$

$\tau_1$

$\tau_2$

**Figure 45**

INSTANTANEOUS frequency

$\tau_1{}'$

$\tau_2{}'$

0

0

$t_1$

$t_2$

$\tau_1$

$\tau_2$

time

If the zero frequency axis has a different relative position on respect to the symbols (brown line), the inversion times are completely different and also the differences are different on respect to the difference of time-shifts, i.e.:

- $\tau_1{}' \neq t_1 \quad \tau_2{}' \neq t_2$ etc.
- $\tau_1{}' \neq \tau_1 \quad \tau_2{}' \neq \tau_2$
- $(\tau_2{}' - \tau_1{}')$ is not equal to $(t_2 - t_1)$

**Figure 46**

INSTANTANEOUS frequency

$\tau_1'$

$\tau_2'$

0

time

It is not necessary to have different time-shifts to produce different inversion-times.

In this case **there is no time-shift**, but only frequency-shifts, **and inversion-times exist**.

**Figure 47**

In the following example, there are 4 symbols (chirps) which differ for frequency-shift. They have not time-shift between them.

Anyway, the correlation of each chirp with one of the three (the second), has a peak shifted in time. The difference between the peaks are proportional with the difference between the correspondent inversion-times.

(In the example:
```
fstart(1)=-41000 Hz
fstart(2)=-12000 Hz
fstart(3)=-54000 Hz
fstart(4)=-22000 Hz
frequency gradient: K=100000/1.2e-3;
T=1,3 ms)
```

x=CHIRP 1 or 2 or 3 or 4

y=CHIRP 2

CROSS-CORRELATOR

**Variation of the inversion-time between symbols are proportional to the correspondent shift of the peak position of a cross-correlation with one chosen symbol <u>even if there is no time-shift</u>.**

**Figure 48**

INSTANTANEOUS frequency

Some prior art systems use an
instantaneous frequency range
$-Fs/2 \div Fs/2$ (the zero frequency is central
in range) and

In the present invention it is possible to
consider any asymmetry of the range of
frequency on respect to the zero frequency:
each type of asymmetry establish a new

**Inversion-times can be produced using a frequency range non symmetrical on respect to the zero instantaneous frequency.**

**Figure 49**

*In the "second way" of the invention*: - inversion-times defined in the receiver -

Receiver local oscillator is not used for time-compensation but for coding)

frequency

- **TRANSMISSION**:

  can be without inversion-time

$t_1$

$t_2$

0

time

INSTANTANEOUS frequency

- **RECEIVER**

  Local oscillator of mixer can be one of a pre-selected frequency, e.g. Fs1 or Fs2.

  **Inversion times depends on the local oscillator frequency**.

  If using a cross-correlation between the received symbol with a chosen symbol of the preset group of symbols, the shift of the peak of the correlation depend on the inversion-time and on the local oscillator frequency.

$\tau_1'$

$\tau_2'$

0

case of Fs2

time

0

case of Fs1

$t_1$

$t_2$

$\tau_1$

$\tau_2$

**So, inversion-time can be defined inside the receiver, being not necessary to have inversion-time in the transmitting signal.**

Note that the choice of the local oscillator frequency among a set of frequency is a further coding level.

**Figure 50**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6064695 A
- US 20140362891 A
- US 20160094270 A